# EUROPEAN PATENT APPLICATION

(11) **EP 2 826 664 A1**
(43) Date of publication of application: **21.01.2015**
(21) Application number: 13760768.5
(22) Date of filing: 13.03.2013
(51) Int. Cl.: B60N 2/68, B60N 2/16

(54) **DEVICE WITH FRAME**

(30) Priority: 14.03.2012 JP 2012057850; 21.09.2012 JP 2012208450
(71) Applicant: TS Tech Co., Ltd., Asaka-shi, Saitama 351-0012 (JP)
(72) Inventor: FURUTA, Masaya, Shioya-gun Tochigi 329-1217 (JP)
(74) Representative: Grünecker, Kinkeldey, Stockmair & Schwanhäusser
(86) International application number: PCT/JP2013/057087
(87) International publication number: WO 2013/137354

(57) **Abstract**

In the manufacturing process of a vehicle seat S, deformation of one-end-side frame 6a made of CFRP in a seat cushion frame 2 is suppressed, when a first revolving arm 33 of a rear side link 30 is assembled to the one-end-side frame 6a, by a portion provided with a metallic sector gear 31. In a vehicle seat S having a seat cushion frame 2 and a rear side link 30 including a metallic sector gear 31, a first revolving arm 33 of the rear side link 30 is assembled to the one-end-side frame 6a made of CFRP in the seat cushion frame 2. Furthermore, in order to assemble the first revolving arm 33 to the one-end-side frame 6a, a first shaft pin 61 made of metal is inserted into both a link assembling hole 51 of the one-end-side frame 6a and a pin hole 31b of the sector gear 31 in a state in which the holes 51 and 31b communicate with each other, and the first shaft pin 61 is fixed by welding to the sector gear 31 in a state in which a flange portion 61b is locked to the one-end-side frame 6a.

## Description

### Technical Field

The present invention relates to a device with a frame, and particularly, to a device with a frame that is configured by assembling an assembly target member having a metal portion to a resin molding portion of a frame having a resin molding portion made of a resin material.

### Background Art

Conventionally, in a device with a frame such as a vehicle seat, a link member such as a reclining mechanism and a bearing surface position adjustment mechanism has been attached to a metallic frame in a freely rotatable manner (for example, see Patent Document 1). Here, a shaft-shaped member and a frame that rotatably support the link member are integrated by being caulked with each other.

Meanwhile, in a vehicle seat as an example of a device with a frame, a part or all of a seat cushion frame may be molded by a resin material for the purpose of weight reduction or the like (for example, see Patent Document 2). Patent Document 2 discloses a seat cushion frame that is integrally formed of glass long fiber reinforced polypropylene molding resin (referred to as a seat pad support in Patent Document 2). In a case where the seat cushion frame is integrally molded by the resin material in this way, it is possible to reduce the component costs, a working process such as joining each part of the seat cushion also becomes unnecessary, and it is possible to more easily produce a seat cushion frame.

Patent Document 1: WO 2012/049725 A
Patent Document 2: JP 11-75984 A

### DISCLOSURE OF THE INVENTION

### Problem to be Solved by the Invention

Incidentally, the device with a frame is completed by assembling the assembly target member to the resin frame. For example, a vehicle seat is completed by assembling an assembly target member such as a seat adjuster mechanism and a height adjustment mechanism to a seat cushion frame. Here, when assembling the assembly target member to the frame, in a case where a jointing portion of the assembly target member side is made of metal and a jointing portion of the frame side is made of a resin material, it is difficult to join the jointing portions together by welding.

Meanwhile, in the case of the seat cushion frame described in Patent Document 2, a slide rail as an assembly target member is assembled to the seat cushion by a bolt. Here, when the jointing portion between the slide rail and the seat cushion frame is made of a resin material, it is apprehended that the jointing portion is deformed when the bolt is tightened (in particular, a portion pressed against a bolt head portion is recessed).

Furthermore, it is desired to more easily perform an operation of assembling an assembly target member to the resin molding portion in the frame. Also, in a case where the assembly target member is a movable element that relatively moves with respect to the resin molding portion in the frame, when the contact resistance between the assembly target member and the resin molding portion is great, it is apprehended that the movable element as the assembly target member is hard to operate. Furthermore, there is also a possibility that abrasion of the resin molding portion occurs due to operation of the movable element while coming into contact with the resin molding portion.

Also, a bent portion may be formed so as to secure the rigidity of the resin molding portion in the frame, and the bent portion extends outward from the outer surface and then is bent to face an outer surface of the resin molding portion. If the assembly target portion interferes with the bent portion when assembling the assembly target member to the resin molding portion having such a configuration, workability may be degraded.

From the viewpoint of more stably holding the assembly target member, it is required that the periphery of the portion of the resin molding portion, to which the assembly target member is assembled, has higher rigidity.

Furthermore, in a vehicle seat having a seat cushion frame made of resin, when a buttocks supporting portion for supporting buttocks of an occupant is provided on the seat cushion frame, in order to improve the feeling of seating at the time of placing the buttocks on the buttocks supporting portion, a hole portion may be provided near the resin molding portion of the seat cushion frame, but there also is a possibility of a decrease in rigidity of the resin molding portion, in particular, the periphery of the portion to which the assembly target member is assembled, due to the hole portion.

Also, as in the case of the metal frame disclosed in Patent Document 1, there is a risk of deformation of the resin frame when attaching a shaft-shaped member to the resin frame by caulking. Since the resin frame has the lower rigidity than the metal frame, a decrease in strength is remarkable when deformed.

The present invention has been made in view of the above-described problems, and an object thereof is to provide a device with a frame that is capable of suppressing deformation of the resin molding portion when an assembly target portion is assembled to the resin molding portion made of a resin material in the frame by a portion provided with a metal portion, in the process of manufacturing a device with a frame having a resin frame.

Furthermore, another object of the present invention is to provide a device with a frame that is capable of more easily performing a work of assembling an assembly target member to a resin molding portion of a frame in the process of manufacturing a device with a frame.

Furthermore, still another object of the present invention is to provide a device with a frame that is assembled to the resin molding portion such that a movable element can be smoothly operated, when the assembly target member is a movable element that relatively moves with respect to the resin molding portion in the frame.

Additionally, still another object of the present invention is to provide a device with a frame that is capable of suppressing an occurrence of abrasion of the resin molding portion due to operation of the movable element as an assembly target member while coming into contact with the resin molding portion.

Moreover, still another object of the present invention is to provide a device with a frame that is capable of suppressing of interference with a bent portion, when assembling the assembly target member to the resin molding portion, in a case where the frame is provided with the bent portion that extends outward from an outer surface of the resin molding portion and then is bent to face the outer surface.

Furthermore, still another object of the present invention is to provide a device with a frame in which rigidity of the periphery of a portion of the resin molding portion, to which the assembly target member is assembled, is improved, from the viewpoint of more stably holding the assembly target member.

Furthermore, still another object of the present invention is to provide a vehicle seat as an example of the device with a frame that is capable of suppressing a decrease in rigidity of the periphery of a portion of the resin molding portion to which the assembly target member is assembled, even if a hole portion is provided near the resin molding portion of the seat cushion frame so as to improve the feeling of seating at the time of placing the buttocks on the buttocks supporting portion, in a case where the buttocks supporting portion for supporting the buttocks of an occupant is provided in the seat cushion frame made of resin.

### Means for Solving Problem

The above-described problems are solved by a device with a frame that includes: a frame having a resin molding portion made of a resin material, and a first hole as a through hole provided in the resin molding portion; an assembly target member which has a metal portion provided with a second hole and is assembled to the resin molding portion at a position in which the second hole communicates with the first hole; and a metallic shaft-shaped member that is inserted into both the first hole and the second hole of a state of communicating with each other to assemble the assembly target member to the resin molding portion, in which the shaft-shaped member has a flange portion locked to the resin molding portion when the shaft-shaped member is inserted to both the first hole and the second hole, and the shaft-shaped member is fixed to the metal portion by welding in a state in which the flange portion is locked to the resin molding portion.

According to the above-described device with a frame, when the assembly target member is assembled to the resin molding portion made of a resin material in the frame by a portion provided with a metal portion, since a fastening member such as a bolt is not used, it is possible to suppress deformation of the resin molding portion by the force from the fastening member.

Furthermore, in the device with a frame, the shaft-shaped member may be fixed to the metal portion by laser welding, a top portion of the shaft-shaped member may have the flange portion, and a non-flange portion positioned inside the flange portion, the non-flange portion may be recessed along the first hole in a state in which the shaft-shaped member is inserted into both the first hole and the second hole, and a welding position of the shaft-shaped member to the metal portion may be located in a portion of the non-flange portion that is adjacent to the metal portion.

When performing the laser welding, it is desired that an interval between an irradiation position of laser and the welding position be short. According to the above-described configuration, since the welding is performed by irradiating laser to the non-flange portion recessed along the first hole in the shaft-shaped member, the interval between the irradiation position and the welding position becomes shorter, and thus, the laser welding is favorably performed. In the case of laser welding, since it is possible to check the welding position by checking the laser irradiation position, the welding operation becomes easier.

Furthermore, in the device with a frame, the assembly target member may be a revolving element that has a gear as the metal portion and relatively revolves with respect to the resin molding portion by driving force transmitted to the gear, the resin molding portion may have a locking portion that locks the flange portion and an adjacent portion that is adjacent to the locking portion, and the locking portion may be interposed between the revolving element and the flange portion in a state of locking the flange portion, and may protrude to the revolving element side from the adjacent portion.

According to such a configuration, since the locking portion is thicker than the adjacent portion in the resin molding portion, it is possible to stably keep a state in which the locking portion locks the flange portion. In addition, since the locking portion protrudes to the revolving element side of the adjacent portion, in the locking portion and the adjacent portion, when only the locking portion comes into contact with the revolving element, a contact resistance occurring between the revolving element and the resin molding portion decreases compared to a case where both the locking portion and the adjacent portion come into contact with the revolving element. Thus, when the revolving element relatively revolves with respect to the resin molding portion, the revolving element is capable of more smoothly operating.

Furthermore, the device with a frame, the revolving element may further have a revolving element main body made of a resin material into which the gear is embedded, the revolving element main body may have an exposure hole for exposing an outer peripheral portion of the second hole in a side surface of the gear to the shaft-shaped member, and an enclosed portion surrounding the exposure hole, and the enclosed portion may be interposed between the gear and the locking portion in a state in which the locking portion is locked to the flange portion.

According to such a configuration, in the state of assembling the revolving element to the resin molding portion, the locking portion comes into contact with the revolving element main body of the revolving element, more specifically, the enclosed portion. Moreover, since the enclosed portion is formed of a resin material, it is possible to reduce abrasion of the locking portion.

Furthermore, in the device with a frame, the device with a frame may be a vehicle seat, the seat cushion frame as the frame may have one-end-side frame as the resin molding portion located at one end portion in a widthwise direction of the vehicle seat, and an other-end-side frame located at an other end portion in the widthwise direction in the state of facing the one-end-side frame, the revolving element main body may have a first revolving arm in which the gear is embedded, a second revolving arm disposed at a position facing the first revolving arm in the widthwise direction, and a hollow connecting pipe that connects the first revolving arm and the second revolving arm, the first revolving arm may be assembled to the one-end-side frame, the second revolving arm may be assembled to the other-end-side frame, and a leading end portion of the shaft-shaped member in the state of being inserted to both the first hole and the second hole may protrude from the second hole as a through hole, and be located at a position that overlaps the connecting pipe in the widthwise direction.

According to such a configuration, it is possible to bring the leading end portion of the shaft-shaped member in the widthwise direction closer to a space of the connecting pipe, and it is possible to reduce the size of the vehicle seat as the device with a frame accordingly.

Furthermore, in the device with a frame, a bent portion may be provided in the one-end-side frame, the bent portion extending along the widthwise direction from an outer surface located outside in the widthwise direction of the one-end-side frame and then being bent to face the outer surface, and the first hole may be provided at a position deviated from a position in which the bent portion of the one-end-side frame is provided as seen from the widthwise direction.

Even in the case of forming the bent portion so as to improve the rigidity of the frame, since the first hole is formed at a position deviated from the position in which the bent portion is provided, when inserting the shaft-shaped member into the first hole, workability can be improved without interfering with the bent portion.

Furthermore, in the device with a frame, the seat cushion frame may have a rear-end-side connection portion that connects a rear end portion of the one-end-side frame and a rear end portion of the other-end-side frame, and may have a seat back frame that is assembled to a portion located on the rear end side from the rear-end-side connection portion, in the rear end portions of each of the one-end-side frame and the other-end-side frame, the first hole may be provided at the rear end portion of the one-end-side frame, and the rear end portion of the rear-end-side connection portion may extend toward the seat back frame of the state of being assembled to the rear end portions of each of the one-end-side frame and the other-end-side frame.

According to such a configuration, even if the first hole is provided, by providing the rear-end-side connection portion having a shape of extending toward the seat back frame, it is possible to compensate for the rigidity of the rear end portion of the one-end-side frame, in particular, the periphery of a part to which the seat back frame is assembled.

Furthermore, in the device with a frame, the device with a frame may be a vehicle seat, the resin molding portion may be one-end-side frame located at one end portion of the seat cushion frame as the frame in the widthwise direction of the vehicle seat, and the other-end-side frame located at the other end portion of the seat cushion frame in the widthwise direction in the state of facing the one-end-side frame, the seat cushion frame may have the one-end-side frame, the other-end-side frame, and a front-end-side connection portion that connects the front end portion of the one-end-side frame and the front end portion of the other-end-side frame, the front-end-side connection portion may be provided with a concave portion formed to be recessed downward, and the first hole may be provided within a range in which the concave portion is provided in a front to back direction of the vehicle seat, in the one-end-side frame.

In the front-end-side connection portion, the portion in which the concave portion is provided has high rigidity. Moreover, since the first hole is provided within the range in which the concave portion is provided in the front to back direction of the vehicle seat in the one-end-side frame, the portion provided with the first hole in the one-end-side frame is supported by a portion having high rigidity in the front-end-side connection portion. That is, the support rigidity of the portion provided with the first hole in the one-end-side frame can be improved.

Furthermore, in the device with a frame, the device with a frame may be a vehicle seat, the seat cushion frame as the frame may have one-end-side frame as the resin molding portion located at one end portion in the widthwise direction of the vehicle seat, the other-end-side frame located at the other end portion in the widthwise direction in the state of facing the one-end-side frame, and a buttocks supporting portion that is located between the one-end-side frame and the other-end-side frame in the widthwise direction of the seat cushion frame to support the buttocks of an occupant, the buttocks supporting portion may be a plate-shaped portion extending along the front to back direction of the vehicle seat, a hole may be provided between the one-end-side frame and the buttocks supporting portion in the widthwise direction, the first hole may be provided within a range in which the hole is provided in the front to back direction in the one-end-side frame, the one-end-side frame may be provided with a bent portion that extends along the widthwise direction from the outer surface located outside in the widthwise direction of the one-end-side frame and then is bent to face the outer surface, and the bent portion may be provided in the one-end-side frame to include a position of the first hole in the front to back direction.

According to such a configuration, since the hole is provided between the one-end-side frame and the buttocks supporting portion, the feeling of seating when placing the buttocks on the buttocks supporting portion is improved. Meanwhile, by providing the hole, the rigidity of the portion, in which the first hole in the one-end-side frame is provided, is lowered, but it is possible to suppress the decrease in rigidity by the bent portion that is provided to include the position of the first hole in the front to back direction.

Furthermore, in the device with a frame, the device with a frame may be a vehicle seat, and the assembly target member may be a link that is provided in a height adjustment mechanism for vertically moving the vehicle seat and revolves around the shaft-shaped member.

According to such a configuration, it is possible to properly attach the link for adjusting the height with respect to the resin frame provided in the vehicle seat.

Furthermore, in the device with a frame, the metal portion may be a supporting member that is a part of the assembly target member and is coaxially attached to the shaft-shaped member, the assembly target member may be a movable member that is pivotally supported by the supporting member to extend along the frame, a convex portion protruding in an axial direction may be provided on the shaft-shaped member, the concave portion serving as the second hole into which the convex portion is inserted may be recessed in the supporting member along the axial direction, and in a boundary between the convex portion of the shaft-shaped member and the concave portion of the supporting member, a welding mark due to laser welding may be formed along the periphery of the convex portion.

According to such a configuration, since the shaft-shaped member fitted to the frame and the supporting member for pivotally supporting the movable member are integrated by the welding mark formed by laser welding in the boundary between each of the convex portion and the concave portion, it is possible to attach the supporting member to the frame without performing the caulking. Therefore, it is possible to suppress deformation of the frame when attaching the shaft-shaped member even if the frame is made of resin.

Furthermore, in the device with a frame, the flange portion may be provided on an opposite side of the side on which the convex portion of the shaft-shaped member is provided, and the flange portion may be provided with a concave portion that surrounds the welding mark.

According to such a configuration, when the laser welding is performed by irradiating a laser beam from the opposite side of the side on which the convex portion of the shaft-shaped member is provided, thereby forming the welding mark along the periphery of the boundary between the convex portion of the shaft-shaped member and the concave portion of the supporting member, since the concave portion surrounding the welding mark is formed on the opposite side of the side on which the convex portion of the shaft-shaped member is provided, it is possible to deepen an entry depth of the laser beam and easily form the welding mark on the further back side.

Furthermore, in the device with a frame, the concave portion of the supporting member may extend to a position passing through the movable member, the convex portion of the shaft-shaped member fitted to the concave portion may extend to a position facing the movable member, and the welding mark may be formed up to a position facing the movable member.

According to such a configuration, since the convex portion of the shaft-shaped member fitted to the concave portion of the supporting member extends to the position facing the movable member, and the welding mark is formed up to the position facing the movable member, a portion for supporting the movable member is embedded by the shaft-shaped member, the supporting member, and the welding mark. Therefore, it is possible to stably support the movable member.

Furthermore, in the device with a frame, the flange portion of the shaft-shaped member may be provided with a stepped portion configured to house the frame so as to interpose the frame together with the supporting member.

According to such a configuration, since the stepped portion configured to house the frame is provided in the shaft-shaped member, if the frame is placed on the stepped portion and is interposed between the supporting member and the shaft-shaped member, it is possible to position the frame.

Furthermore, in the device with a frame, the stepped portion, the frame, and the welding mark may be present on the same plane.

According to such a configuration, since the stepped portion, the frame, and the welding mark are present on the same plane, the frame vertically receives the self-weight of the supporting member, the movable member, and the connection member acting on the shaft-shaped member, thereby being able to increase the attachment rigidity of the shaft-shaped member to the frame.

Furthermore, in the device with a frame, the welding mark may be formed in a zigzag pattern along the boundary.

According to such a configuration, since the welding mark is formed in a zigzag pattern along the boundary, it is possible to increase the total length of the welding mark, and to more firmly integrate the supporting member with the shaft-shaped member.

Furthermore, the device with a frame may be a seat, the seat may have right and left cushion frames serving as the frame, and a pipe-shaped connection member assembled to the right and left cushion frames via the first hole, and the supporting member may be coaxially attached to the shaft-shaped member and may be fitted to the connection member.

According to such a configuration, since the shaft-shaped member fitted to the cushion frame and the supporting member configured to pivotally support the movable member are integrated by the welding mark formed in the boundary between each of the convex portion and the concave portion by the laser welding, it is possible to attach the supporting member to the cushion frame even without performing the caulking. Therefore, even if the cushion frame is made of resin, it is possible to suppress deformation of the frame when attaching the supporting member. Moreover, if it is possible to suppress the deformation, it is possible to secure the rigidity of the cushion frame itself.

Furthermore, in the device with a frame, the connection member, the supporting member, and the shaft-shaped member may be coaxially disposed.

According to such a configuration, since the connection member, the supporting member, and the shaft-shaped member are coaxially disposed, it is possible to compactly assemble the members as compared to a case where the respective members are disposed on the different axes.

Furthermore, in the device with a frame, the movable member may have the supporting member and a movable member main body that is pivotally supported on the supporting member by fitting the supporting member, and an outer diameter of a shaft portion configured to pivotally support the movable member main body in the supporting member may be smaller than an outer diameter of the connection member.

According to such a configuration, since the outer diameter of the shaft portion configured to pivotally support the movable member in the supporting member is smaller than the outer diameter of the connection member, it is possible to suppress the enlargement of the supporting member.

Furthermore, in the device with a frame, the concave portion of the supporting member may be provided to the inner side from the end portion of the connection member.

According to such a configuration, since the concave portion of the supporting member is provided to the inner side from the end portion of the connection member, it is possible to reduce the weight while maintaining the strength of the supporting member to some extent.

Furthermore, in the device with a frame, the convex portion of the shaft-shaped member may be provided to an inner side from the end portion of the connection member.

According to such a configuration, since the convex portion of the shaft-shaped member is provided to the inner side from the end portion of the connection member, it is possible to enhance the support rigidity of the supporting member and the shaft-shaped member due to supporting the connection member.

### Effect of the Invention

According to the invention, when assembling the assembly target member to the resin molding portion made of a resin material in the frame, it is possible to suppress the deformation of the resin molding portion.

According to the invention, the laser welding is favorably performed, and the welding operation becomes easier.

According to the invention, it is possible to stably keep a state in which the locking portion locks the flange portion. In addition, it is possible to reduce the contact resistance between the revolving element and the resin molding portion, and thereby it is possible to operate the revolving element more smoothly, when the revolving element relatively revolves with respect to the resin molding portion.

According to the invention, it is possible to reduce abrasion of the locking portion.

According to the invention, it is possible to bring the leading end portion of the shaft-shaped member in the widthwise direction closer to the space of the connecting pipe, and it is possible to reduce the size of the vehicle seat as the device with a frame accordingly.

According to the invention, even in the case of forming the bent portion so as to improve the rigidity of the frame, when inserting the shaft-shaped member to the first hole, the shaft-shaped member does not interfere with the bent portion, and thus, the workability is improved.

According to the invention, it is possible to compensate for the rigidity of the periphery of the rear end portion of the one-end-side frame even when forming the first hole.

According to the invention, the support rigidity of the portion, in which the first hole in the one-end-side frame is formed, is improved.

According to the invention, in the vehicle seat as the device with a frame, the feeling of seating when placing the buttocks on the buttocks supporting portion is improved, and it is possible to suppress a decrease in rigidity of a portion in which the first hole in the one-end-side frame is formed, due to provision of the hole portion.

According to the invention, it is possible to suitably attach the height adjusting link to the resin frame provided in the vehicle seat as the device with a frame.

According to the invention, it is possible to suppress deformation when attaching the shaft-shaped member even if the frame is made of resin.

According to the invention, when forming a welding mark along the periphery of the boundary between the convex portion of the shaft-shaped member and the concave portion of the supporting member, by irradiating a laser beam to perform the laser welding, the welding mark is easily formed on the further back side by deepening the entry depth of the laser beam.

According to the invention, since the portion for supporting the movable member is embedded by the shaft-shaped member, the supporting member, and the welding mark, it is possible to stably support the movable member.

According to the invention, it is possible to position the frame by placing the frame in the stepped portion formed in the shaft-shaped member to be interposed between the supporting member and the shaft-shaped member.

According to the invention, it is possible to enhance the attachment rigidity of the shaft-shaped member to the frame.

According to the invention, it is possible to increase the total length of the welding mark and to more firmly integrate the supporting member with the shaft-shaped member.

According to the invention, it is possible to suppress deformation at the time of attaching the supporting member to the cushion frame made of resin, and to secure the rigidity of the cushion frame itself.

According to the invention, it is possible to compactly assemble the members as compared to the case where the connection member, the supporting member, and the shaft-shaped member are respectively disposed on the different axes.

According to the invention, it is possible to suppress the enlargement of the supporting member.

According to the invention, it is possible to reduce the weight while maintaining the strength of the supporting member to some extent.

According to the invention, it is possible to enhance the support rigidity of the supporting member and the shaft-shaped member due to supporting the connection member.

### BRIEF DESCRIPTION OF THE DRAWINGS

Fig. 1 is a schematic perspective view of a vehicle seat according to this embodiment;
Fig. 2 is a schematic perspective view illustrating a frame of the vehicle seat according to this embodiment;
Fig. 3 is a schematic side view illustrating the frame of the vehicle seat according to this embodiment;
Fig. 4 is a schematic perspective view of a seat cushion frame according to this embodiment;
Fig. 5 is a cross-sectional view taken from a line A-A of Fig. 4;
Fig. 6 is a diagram illustrating a height adjustment mechanism which illustrates a state at which a vehicle seat S is at a normal position;
Fig. 7 is a diagram illustrating the height adjustment mechanism which illustrates a state at which the vehicle seat S is at a raised position;
Fig. 8 is a schematic perspective view of a rear side link as viewed from one side;
Fig. 9 is a schematic perspective view of the rear side link as viewed from an opposite side of the case of Fig. 8;
Fig. 10 is a diagram illustrating a gear of a state of being embedded in a first revolving arm;
Fig. 11 is a schematic perspective view of a front side link;
Fig. 12 is a schematic cross-sectional view illustrating an assembly structure of the first revolving arm;
Fig. 13 is a schematic cross-sectional view illustrating an assembly structure of a second revolving arm;
Fig. 14 is a schematic cross-sectional view illustrating an assembly structure of a revolving portion of the front side link;
Fig. 15 is a schematic plan view of a seat cushion frame according to this embodiment;
Fig. 16 is a schematic perspective view of a seat cushion frame according to a modified example;
Fig. 17 is a side view illustrating a schematic configuration of a seat structure according to a second embodiment;
Fig. 18 is a cross-sectional view illustrating a schematic configuration of an attachment structure of a frame and a shaft member according to the second embodiment;
Fig. 19 is a perspective view illustrating a schematic configuration of an attachment structure of the frame and the shaft member of Fig. 18;
Fig. 20 is a front view illustrating a schematic configuration of a welding mark according to the second embodiment; and
Fig. 21 is a front view illustrating a modified example of the welding mark.

### DETAILED DESCRIPTION OF THE INVENTION

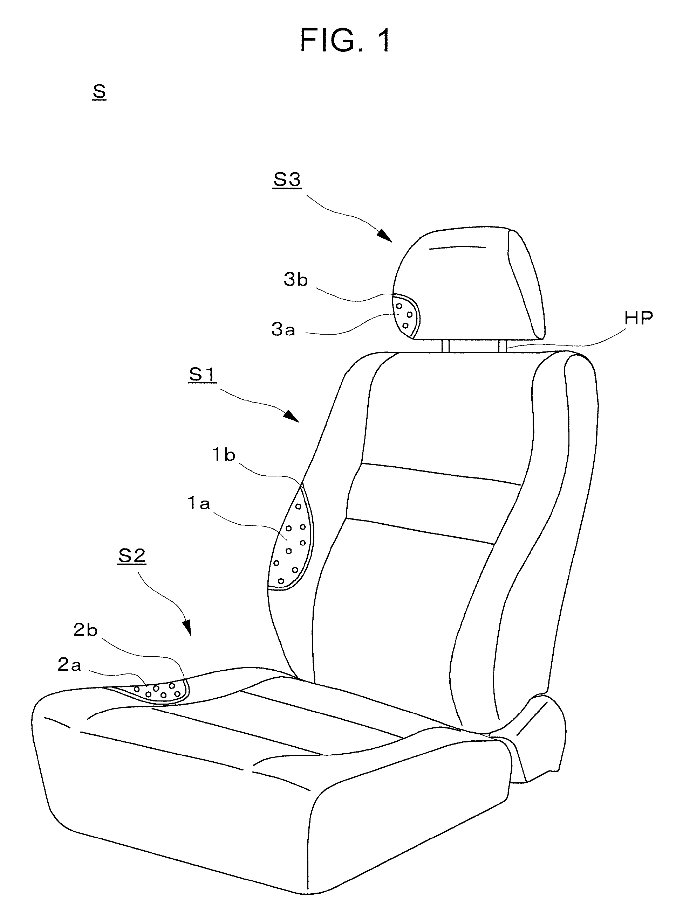

Hereinafter, as embodiments of the present invention (referred to as this embodiment), a configuration example of a seat as an example of a device with a frame according to the present invention, more specifically, a vehicle seat will be described with reference to Figs. 1 to 16. The embodiments described below are only examples for easily understanding this invention but are not intended to limit the present invention. That is, the shapes, the dimensions, the arrangements and the like of members described below can be modified and improved without departing from the spirit of the present invention, and the equivalents thereof are, of course, included in the present invention.

Furthermore, in the following description, a front to back direction is a direction that matches a traveling direction of a vehicle, a widthwise direction corresponds to a widthwise direction of a vehicle seat of the present invention and is a direction along a width of the vehicle, and a vertical direction is a vertical direction of the vehicle. Moreover, positions of each member and each part to be described below are positions when the vehicle seat in the finished state is attached to a normal position of the vehicle.

As illustrated in Fig. 1, a vehicle seat S according to this embodiment has a seat back S1, a seat cushion S2, and a headrest S3, and the seat back S1 and the seat cushion S2 are configured to be covered with surface materials 1b and 2b by disposing cushion pads 1a and 2a on frames 1 and 2, respectively. The headrest S3 has a configuration that is covered with a surface material 3b by disposing a cushion pad 3a on a core material (not illustrated), and is supported by a headrest pillar HP that is attached to the seat back frame 1.

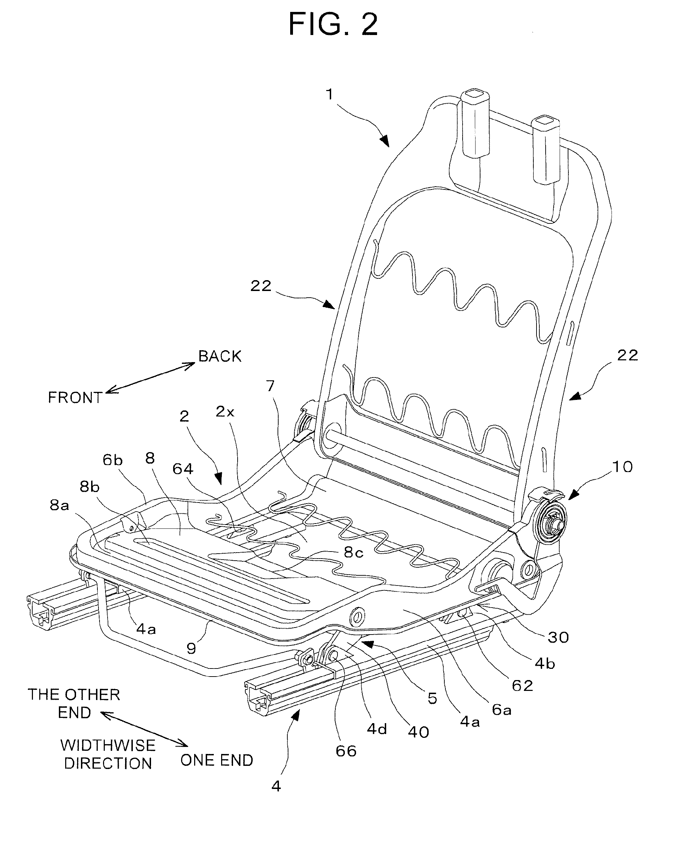

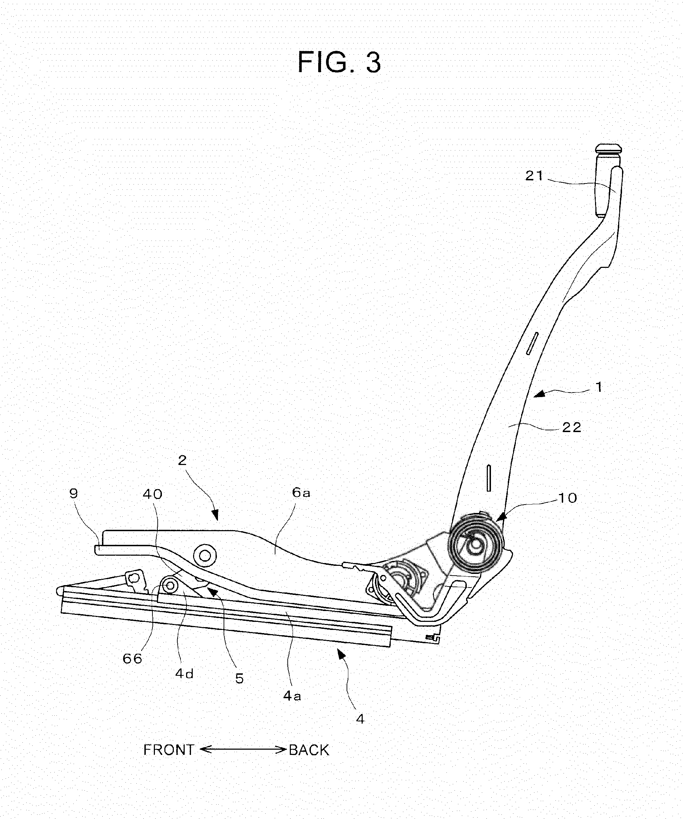

As illustrated in Figs. 2 and 3, the frame of the vehicle seat S according to this embodiment has, as main components, the seat back frame 1 forming the seat back S1, and the seat cushion frame 2 forming the seat cushion S2.

The seat cushion frame 2 has a substantially square shape as viewed in a plan view, and is integrally molded by carbon fiber reinforced plastic (CFRP) as a resin material in this embodiment. Moreover, in a lower part of the seat cushion frame 2, a slide rail mechanism 4 for allowing sliding movement of the vehicle seat S in the front to back direction is attached to a vehicle floor, and a height adjustment mechanism 5 for vertically moving the vehicle seat S is interposed between the seat cushion frame 2 and the slide rail mechanism 4.

The seat back frame 1 has a substantially square shape as viewed in a plan view, and is integrally molded by CFRP in this embodiment, similarly to the seat cushion frame 2. The seat back frame 1 is supported by being connected to a rear end portion of the seat cushion frame 2 via a reclining mechanism 10 at a lower end portion thereof. The seat back frame 1 in such a state is able to relatively revolve with respect to the seat cushion frame 2 in a direction indicated by an arrow in Fig. 3.

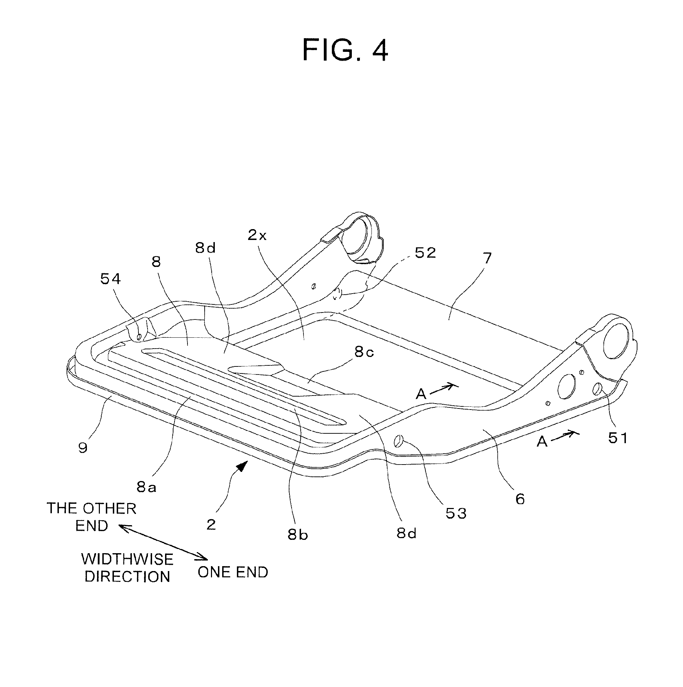

The above-described seat cushion frame 2 will be described in more detail. As illustrated in Fig. 4, the seat cushion frame 2 has a pair of side portion frames 6a and 6b located at both end portions in the widthwise direction of the seat cushion frame 2, a rear-end-side connection portion 7 that connects the rear end portions of the side portion frames 6a and 6b, and a front-end-side connection portion 8 that connects the front end portions of the side portion frames 6a and 6b.

As described above, each portion of the seat cushion frame 2 is integrally molded by CFRP. In particular, the seat cushion frame 2 according to this embodiment is manufactured by metallic molding, but is not limited thereto, and it may be molded by a molding method other than the metallic molding, for example, by laminating a seat made of a resin material to match a frame shape. Furthermore, a material of the seat cushion frame 2 is also not limited to CFRP and may be other resin materials.

Furthermore, in this embodiment, the entire seat back frame 1 is molded by CFRP as a resin material, but is not limited to this, and at least the side portion frames 6a and 6b of the seat back frame 1, to which an assembly target member to be described later is assembled, may be made of a resin material.

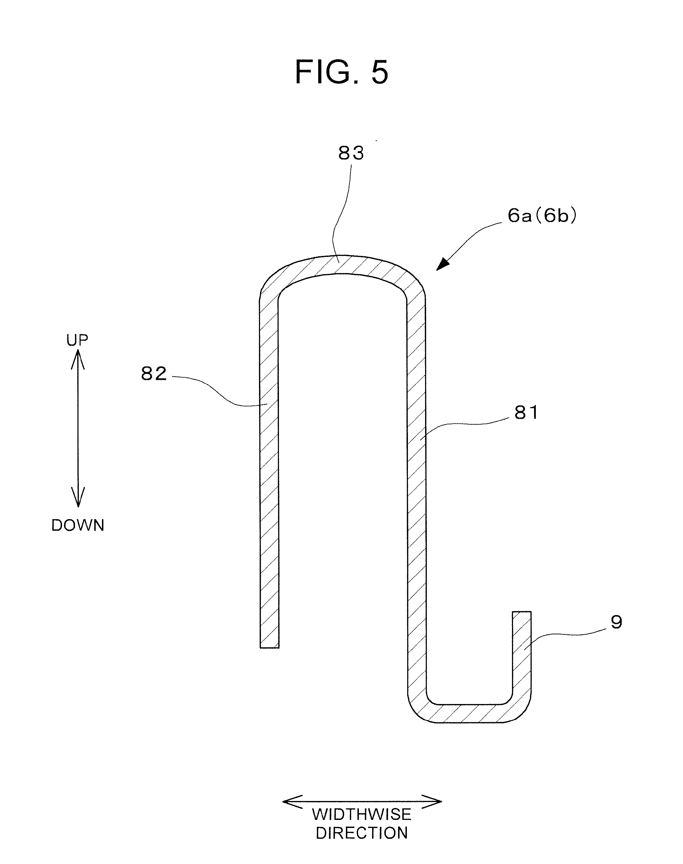

Each of the pair of side portion frames 6a and 6b is long along the front to back direction of the vehicle seat S, and as illustrated in Fig. 5, a cross-section in which the front to back direction is set as a normal direction (that is, an A-A cross-section in Fig. 4) has an inverse U shape. In this embodiment, by employing the above-described cross-sectional shape, for example, the rigidity of the side portion frames 6a and 6b is improved as compared to the case of a substantially I-shaped cross-section.

Moreover, the seat back frame 1, more specifically, a side frame 22 of the seat back frame 1 is attached to the inner side of the rear end portion of the side portion frames 6a and 6b, via the reclining mechanism 10.

Furthermore, in the rear end portions of the side portion frames 6a and 6b, in a part located below a part in which the side frame 22 is attached, a rear side link 30 to be described later is assembled. To be more specific, at the rear end portions of the side portion frames 6a and 6b, link assembling holes 51 and 52 formed to assemble the rear side link 30 are formed, respectively.

Furthermore, a front side link 40 to be described later is assembled to the front end portions of the side portion frames 6a and 6b. To be specific, at the front end portions of the side portion frames 6a and 6b, the link assembling holes 53 and 54 formed to assemble the front side link 40 are formed, respectively.

In addition, in the following description, in the pair of side portion frames 6a and 6b, the side portion frame 6a located on one-end-side in the widthwise direction of the seat cushion frame 2 is referred to as one-end-side frame 6a, and the side portion frame 6b located on the other-end-side in the widthwise direction of the seat cushion frame 2 in the state of facing the one-end-side frame 6a is referred to as the other-end-side frame.

The rear-end-side connection portion 7 is molded to be somewhat widened along the front to back direction, and in particular, in this embodiment, the rear-end-side connection portion 7 is provided in front of the part to which the seat back frame 1 is attached in the rear end portions of each of the one-end-side frame 6a and the other-end-side frame 6b. Furthermore, in this embodiment, the rear end portion of the rear-end-side connection portion 7 extends toward the seat back frame 1 of the state of being assembled to the rear end portions of each of the one-end-side frame 6a and other-end-side frame 6b.

To be described easier, as illustrated in Fig. 2, the part to which the seat back frame 1 is attached is located at the uppermost part in the rear end portions of each of the one-end-side frame 6a and the other-end-side frame 6b, and the rear-end-side connection portion 7 is provided at a position lower than the part to which the seat back frame 1 is attached. Meanwhile, as illustrated in Fig. 2, in regard to the rear-end-side connection portion 7, its rear end position is higher than the front end position. That is, the rear-end-side connection portion 7 is formed in a state of being tilted with respect to the front to back direction, and the rear end portion thereof extends toward the seat back frame 1 of a state of being assembled to the rear end portions of each of the one-end-side frame 6a and the other-end-side frame 6b.

In addition, in the rear-end-side connection portion 7 formed in the tilted state, a surface positioned in front is a surface that supports the periphery of a lumbar part of an occupant seated on the vehicle seat S, and a central portion thereof is a curved surface that is curved so as to bulge rearward. Thus, the feeling of seating (feeling) when the occupant is seated on the vehicle seat S is improved.

The front-end-side connection portion 8 is a portion corresponding to a so-called pan frame, and is expanded rearward from the front ends of each of the one-end-side frame 6a and the other-end-side frame 6b. In this embodiment, as illustrated in Fig. 4, from the purpose of improving the rigidity, concave portions 8a, 8b and 8c are formed at a plurality of locations of the front-end-side connection portion 8. The parts, in which the concave parts 8a, 8b and 8c are provided in the front-end-side connection portion 8, are recessed downward to form the respective concave portions 8a, 8b and 8c. The concave portion 8c located at the rearmost part of such concave portions 8a, 8b, and 8c is a recess having a substantially square shape as viewed in a plan view that is formed at the center in the widthwise direction of the rear end portion of the front-end-side connection portion 8.

Furthermore, the concave portion 8a located at the foremost part of the front-end-side connection portion 8 is a recess having a substantially U shape as viewed in a plan view formed along the outer edge of the front end portion of the seat cushion frame 2. The concave portion 8b located at an intermediate position of the concave portions 8a and 8c in the front-end-side connection portion 8 is a recess having a substantially rectangular shape as viewed in a plan view formed along the widthwise direction of the vehicle seat S.

Moreover, an opening 2X having a rectangular shape as viewed in a plan view is formed between the rear-end-side connection portion 7 and the front-end-side connection portion 8 in the seat cushion frame 2, and a supporting member such as an S spring laid above the opening 2X is adapted to support the buttocks of the occupant seated on the vehicle seat S. In addition, in the front-end-side connection portion 8, a portion located between the concave portion 8c formed to be recessed in a substantially square shape as viewed in a plan view and the one-end-side frame 6a or the other-end-side frame 6b functions as a leg support portion 8d that supports the legs of the occupant seated on the vehicle seat S. Moreover, in this embodiment, since the leg support portion 8d is located at a portion having high rigidity, by being located between the concave portion 8c, which has a substantially square shape as viewed in a plan view, of the front-end-side connection portion 8 and the one-end-side frame 6a or the other-end-side frame 6b, it is possible to stably support the legs of the occupant.

Furthermore, in the seat cushion frame 2 of this embodiment, for the purpose of securing the rigidity, a bent portion 9 is provided over the entire outer peripheral surface except the rear end. The bent portions 9 is a portion that extends from the lower end position of each of the outer peripheral surface of the seat cushion frame 2, specifically, the outer surfaces located outside in the widthwise direction of the one-end-side frame 6a and the other-end-side frame 6b, and the front end surface of the front-end-side connection portion 8, and is formed, for example, by press molding.

The bent portion 9 has a shape of extending outward from the outer peripheral surface and then is substantially vertically (in an L-shape) bent upward. That is, as illustrated in Fig. 5, the bent portion 9 provided on the outer surface lower end portions of the one-end-side frame 6a and the other-end-side frame 6b extends in the widthwise direction and then is substantially vertically bent upward so as to face the outer surface. Meanwhile, the bent portion 9 provided on the front end surface lower end portion of the front-end-side connection portion 8 extends forward and then is substantially vertically bent upward so as to face the front end surface.

In addition, the bent portion 9 may be provided, for example, in the upper end portion of the outer peripheral surface of the seat cushion frame 2 or may be provided in any of the upper end portion and the lower end portion of the outer peripheral surface of the seat cushion frame 2, without being limited to the case of being provided in the lower end portion of the outer peripheral surface of the seat cushion frame 2.

Furthermore, in this embodiment, the entire seat cushion frame 2 including the one-end-side frame 6a and the other-end-side frame 6b is molded by CFRP as a resin material, but is not limited to this, and a portion, to which at least the rear side link 30 and the front side link 40 in the seat cushion frame 2 are assembled, may be made of a resin material.

Next, the height adjustment mechanism 5 will be described. The height adjustment mechanism 5 is disposed between the seat cushion frame 2 and the slide rail mechanism 4 in the vertical direction, and is operated by actuation of an actuating lever (not illustrated).

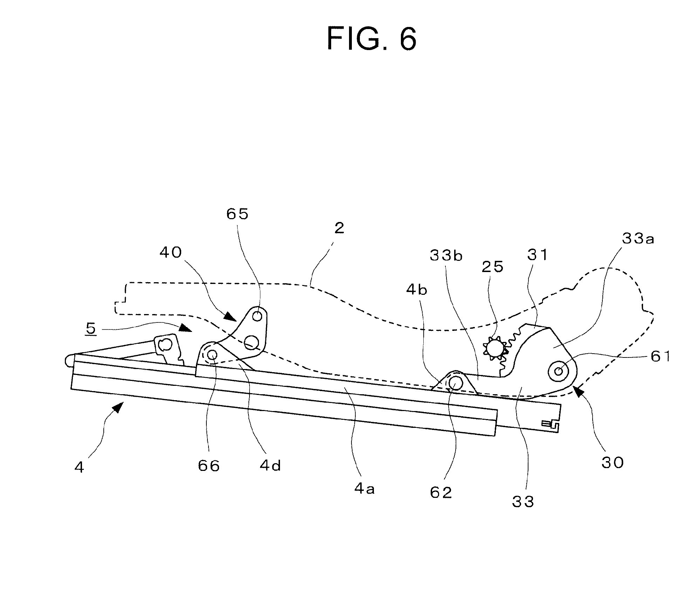

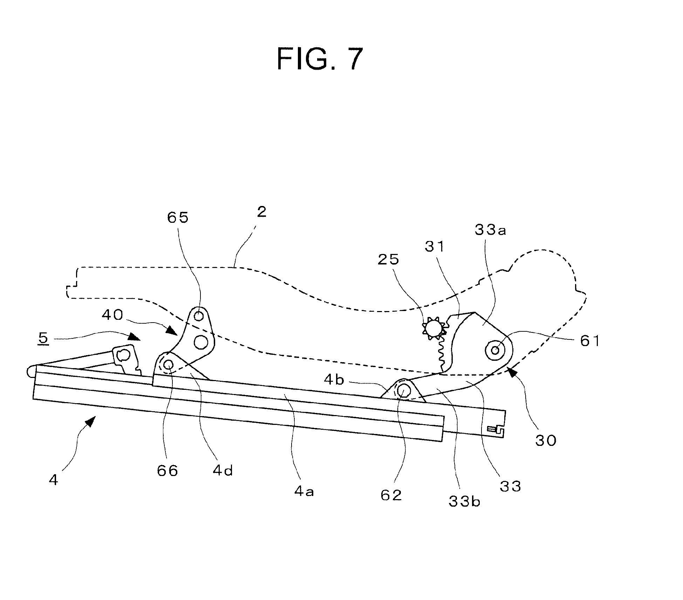

An example of a configuration of the height adjustment mechanism 5 will be described. As illustrated in Figs. 6 and 7, the height adjustment mechanism 5 has, as main components, a rear side link 30 and a front side link 40 as an example of a revolving element.

The rear side link 30 is attached to the rear end portion of each of the one-end-side frame 6a and the other-end-side frame 6b, and is supported with respect to a link support protrusion 4b provided on the movable rail 4a of the slide rail mechanism 4, in a freely revolvable manner. The rear side link 30 has a sector gear 31 as an example of a gear, and when driving force is transmitted to the sector gear 31 from a pinion gear 25 interlocked with the actuating lever, the rear side link 30 revolves so as to move between a position illustrated in Fig. 6 and a position illustrated in Fig. 7 by the driving force.

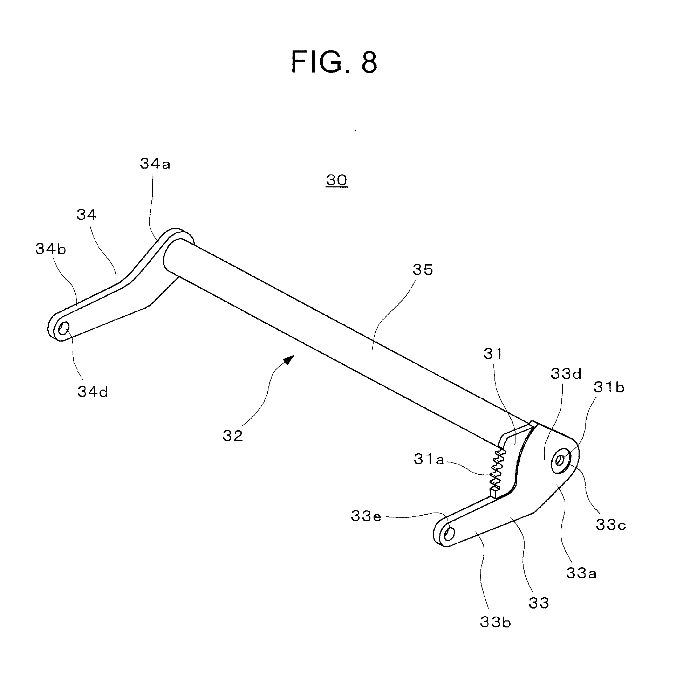

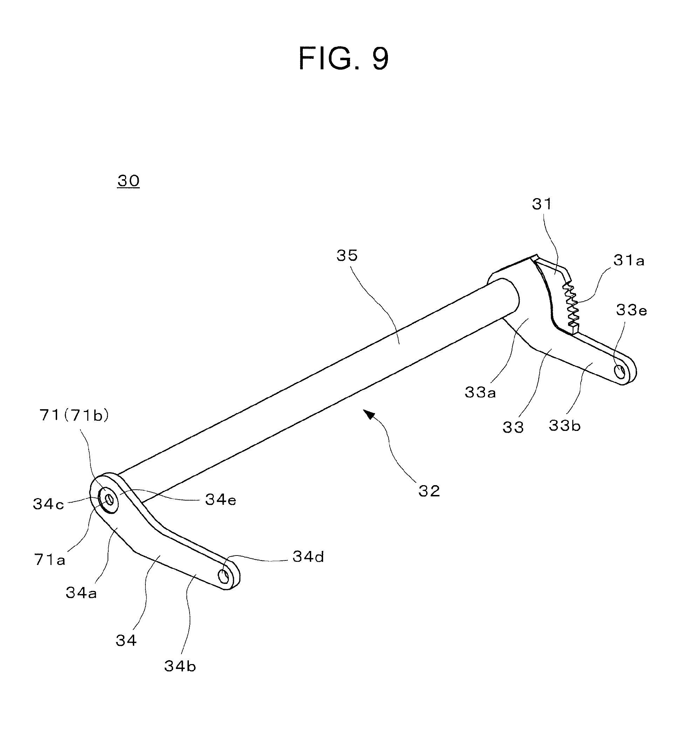

The structure of the rear side link 30 will be described. As illustrated in Figs. 8 and 9, the rear side link 30 has the sector gear 31, and a link main body 32 in which the sector gear 31 is embedded. The link main body 32 corresponds to a revolving element main body made of CFRP as a resin material, and has a first revolving arm 33, a second revolving arm 34, and a connecting pipe 35 that connects the first revolving arm 33 and the second revolving arm 34. In this embodiment, the rear side link 30 is integrally molded by insert molding that is performed by injecting CFRP in a state of inserting the sector gear 31 into a mold (not illustrated).

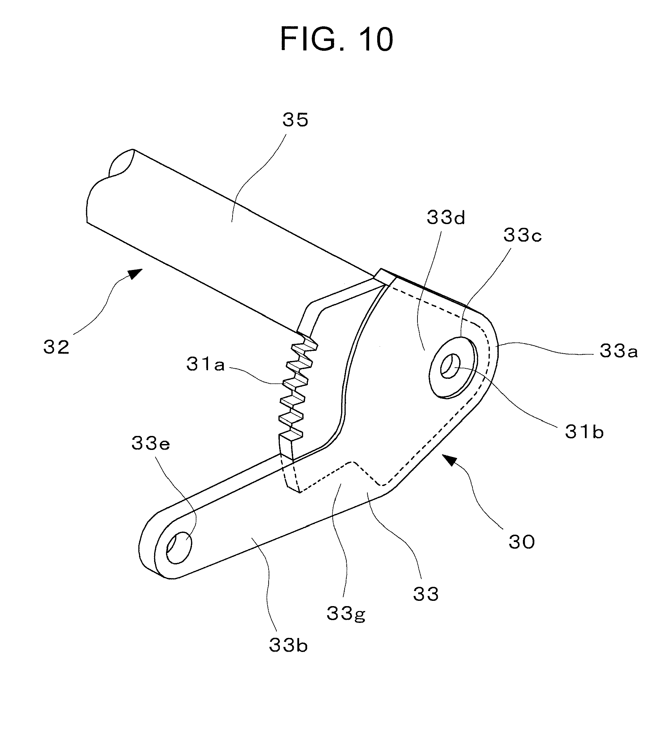

Each part of the rear side link 30 will be described in detail. The sector gear 31 is a substantially fanshaped metal element, a gear portion 31a engaging with the pinion gear 25 is formed on the outer peripheral portion thereof, and a pin hole 31b for fitting a first shaft pin 61 to be described later is formed on its top portion. In addition, as illustrated in Fig. 10, in the sector gear 31 according to this embodiment, an end portion located on the lower side is cut in the outer peripheral portion formed with the gear portion 31a.

The first revolving arm 33 is a portion in which the sector gear 31 in the link main body 32 is embedded, and when the height adjustment mechanism 5 is attached to the seat cushion frame 2, the first revolving arm 33 is assembled to the one-end-side frame 6a. Furthermore, the first revolving arm 33 is assembled to the link support protrusion 4b of the movable rail 4a.

In other words, as illustrated in Fig. 8, the first revolving arm 33 has a frame side end portion 33a having a substantially fan shape as viewed in a side view in the portion assembled to the one-end-side frame 6a, and a rail side end portion 33b having a substantially semi-elliptical shape as viewed in a plan view in the portion assembled to the movable rail 4a.

The sector gear 31 is embedded in the frame side end portion 33a so that the gear portion 31a is exposed, and at a central corner, a circular exposure hole 33c for exposing the pin hole 31b and its outer peripheral portion in the side surface of the sector gear 31 to the first shaft pin 61 is formed. Furthermore, an enclosed portion 33d surrounding the exposure hole 33c is provided at the frame side end portion 33a.

Moreover, when the first shaft pin 61 is inserted into both the pin hole 31b of the sector gear 31 and a link assembling hole 51 provided at the rear end portion of the one-end-side frame 6a and is assembled to the one-end-side frame 6a, the first revolving arm 33 is in a state capable of relatively revolving with respect to the one-end-side frame 6a around the first shaft pin 61.

As described above, in the rear side link 30 according to this embodiment, a portion, which has the sector gear 31 meshing with the pinion gear 25 of the rotation state and revolves by transmission of the driving force from the pinion gear 25 to the sector gear 31, is made of CFRP except sector gear 31. Thus, the weight reduction of the rear side link 30 is achieved.

Furthermore, in the sector gear 31 according to this embodiment, as described above, in the outer peripheral portion formed with the gear portion 31a, an end portion located on the lower side is cut. Thus, when performing the insert-molding of the rear side link 30, CFRP slips into the notch portion of the sector gear 31. As a result, as illustrated in Fig. 10, a retaining portion 33g is formed inside the frame side end portion 33a of the first revolving arm 33, and the retaining portion 33g is engaged with the notch portion to regulate the escape of the sector gear 31 from the first revolving arm 33.

Meanwhile, at a leading end portion of the rail side end portion 33b, that is, at the end portion of an opposite side of the frame side end portion 33a, a pin hole 33e for fitting a second shaft pin 62 to be described later is formed. When the second shaft pin 62 is inserted into both the pin hole 33e and a link support hole (not illustrated) formed in the link support protrusion 4b of the movable rail 4a and is assembled to the movable rail 4a, the first revolving arm 33 is supported in a state that is capable of relatively revolving with respect to the movable rail 4a around the second shaft pin 62.

In addition, in order to support the first revolving arm 33 with respect to the movable rail 4a in a relatively revolvable state, for example, a bush or a sleeve made of metal is embedded in the leading end portion of the rail side end portion 33b so as to be located inside the pin hole 33e, and the second shaft pin 62 of a state of being inserted into both the pin hole 33e and the link support hole (not illustrated) may be laser-welded to the bush and the sleeve.

Since the second revolving arm 34 is connected to the first revolving arm 33 via the connecting pipe 35, the second revolving arm 34 is a part that revolves integrally with the first revolving arm 33, and in a state in which the height adjustment mechanism 5 is attached to the seat cushion frame 2, the second revolving arm 34 is disposed at a position facing the first revolving arm 33 in the widthwise direction. When the height adjustment mechanism 5 is attached to the seat cushion frame 2, the second revolving arm 34 is assembled to the other-end-side frame 6b at the one end portion thereof. Furthermore, the second revolving arm 34 is assembled to the link support protrusion 4b of the movable rail 4a at the other end portion thereof.

To be more specific, as illustrated in Fig. 9, the second revolving arm 34 has a shape of being bent in a substantially V shape as viewed in a side view, and has a frame side end portion 34a assembled to the other-end-side frame 6b, and a rail side end portion 34b assembled to the movable rail 4a.

At the leading end portion of the frame side end portion 34a, that is, at the end portion of an opposite side of the rail side end portion 34b, a pin hole 34c for fitting a third shaft pin 63 to be described later is formed, a metal bush 71 of a metallic ring element is embedded in the second revolving arm 34 so as to be located inside the pin hole 34c. That is, in this embodiment, when performing the insert-molding of the rear side link 30, the insert-molding is performed by injecting CFRP in the state of inserting the sector gear 31 and the metal bush 71 into the mold.

In addition, the outer diameter of the pin hole 34c is somewhat larger than the diameter of a through hole 71a of the metal bush 71. That is, at the frame side end portion 34a of the second revolving arm 34, the through hole 71a and the outer peripheral portion thereof (specifically, a bush side flange portion 71b) are exposed to the third shaft pin 63, in the side surface of the metal bush 71. Meanwhile, at the frame side end portion 34a, an enclosed portion 34e surrounding the pin hole 34c is formed.

Moreover, when the third shaft pin 63 is inserted to both the pin hole 34c formed in the frame side end portion 34a of the second revolving arm 34 and the link assembling hole 52 provided at the rear end portion of the other-end-side frame 6b, and is assembled to the one-end-side frame 6a, the second revolving arm 34 is in a state that is capable of relatively revolving with respect to the other-end-side frame 6b around the third shaft pin 63. In addition, strictly speaking, the third shaft pin 63 is inserted into the link assembling hole 52 provided at the rear end portion of the other-end-side frame 6b and the through hole 71a of the metal bush 71.

Meanwhile, at the leading end portion of the rail side end portion 34b, that is, at the end portion of an opposite side of the side in which the frame side end portion 34a is positioned, a pin hole 34d for fitting a fourth shaft pin 64 to be described later is formed. When the fourth shaft pin 64 is inserted into both the pin hole 34d and the link support hole (not illustrated) formed in the link support protrusion 4b of the movable rail 4a, and is assembled to the movable rail 4a, the second revolving arm 34 is supported in a state that is capable of relatively revolving with respect to the movable rail 4a around the fourth shaft pin 64.

In addition, in order to support the second revolving arm 34 in a state that is capable of relatively revolving with respect to the movable rail 4a, for example, the bush or sleeve made of metal is embedded in the leading end portion of the rail side end portion 34b so as to be located inside the pin hole 34d, and the fourth shaft pin 64 in a state of being inserted into both the pin hole 34d and the link support hole (not illustrated) may be laser-welded to the bush or the sleeve.

The connecting pipe 35 is a hollow-shaped portion that connects the frame side end portion 33a of the first revolving arm 33 and the frame side end portion 34a of the second revolving arm 34, and in this embodiment, an internal space of the connecting pipe 35 is in communication with the pin hole 31b of the sector gear 31 and the pin hole 34c provided in the frame side end portion 34a of the second revolving arm 34.

The front side link 40 is attached to the front end portion of each of the one-end-side frame 6a and the other-end-side frame 6b, and is supported with respect to the link support protrusion 4d provided in the movable rail 4a of the slide rail mechanism 4 in a freely revolvable manner. The front side link 40 revolves so as to move between the position illustrated in Fig. 6 and the position illustrated in Fig. 7 in conjunction with the revolving of the rear side link 30.

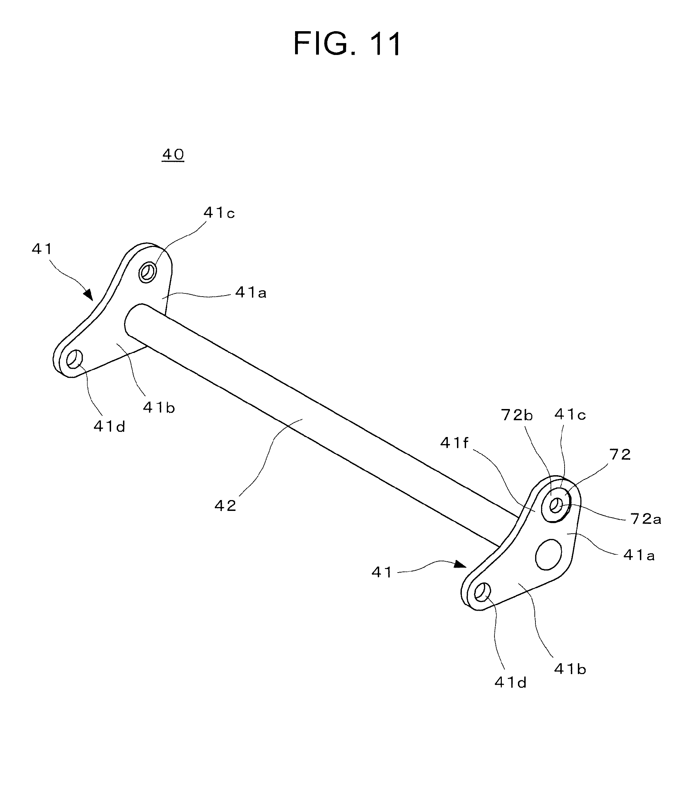

As illustrated in Fig. 11, the front side link 40 has a pair of revolving portions 41 and 41 provided in a state of facing each other, a metal bush 72 embedded in each of the pair of revolving portions 41 and 41, and a hollow connecting pipe 42 that connects the revolving portions 41 and 41. In this embodiment, the front side link 40 is integrally molded by insert-molding that is performed by injecting CFRP in the state of inserting the metal bush 72 into a mold (not illustrated).

As illustrated in Fig. 11, since the front side link 40 has a symmetrical structure, only a structure of one-end-side of the right and left direction, that is, in the widthwise direction will be described below.

The revolving portion 41 of the one-end-side in the widthwise direction is a portion located at the one end portion in the widthwise direction of the front side link 40, and when the height adjustment mechanism 5 is attached to the seat cushion frame 2, the revolving portion 41 is assembled to the one-end-side frame 6a and is assembled to link support protrusion 4d of the movable rail 4a.

In other words, as illustrated in Fig. 11, the revolving portion 41 of the one-end-side in the widthwise direction is bent in a substantially V shape as viewed in a side view, and has a frame side end portion 41a assembled to the one-end-side frame 6a, and a rail side end portion 41b assembled to the movable rail 4a.

At the leading end portion of the frame side end portion 41a, that is, at the end portion of an opposite side of the rail side end portion 41b, a pin hole 41c for fitting a fifth shaft pin 65 to be described later is formed, and the metal bush 72 as a metallic ring element is embedded in the frame side end portion 41a of the revolving portion 41 so as to be located inside the pin hole 41c.

Moreover, when the fifth shaft pin 65 is inserted into both the pin hole 41c formed at the frame side end portion 41a of the revolving portion 41 and the link assembling hole 53 provided at the front end portion of the one-end-side frame 6a and is assembled to the one-end-side frame 6a, the revolving portion 41 is in a state capable of relatively revolving with respect to the one-end-side frame 6a around the fifth shaft pin 65. To be more precise, the fifth shaft pin 65 is inserted into the link assembling hole 53 and the through hole 72a of the metal bush 72.

In addition, the outer diameter of the pin hole 41c is somewhat larger than the diameter of the through hole 72a of the metal bush 72. That is, at the frame side end portion 41a of the revolving portion 41, the through hole 72a and the outer peripheral portion thereof (specifically, a bush side flange portion 72b) in the side surface of the metal bush 72 are exposed to the fifth shaft pin 65. Meanwhile, at the frame side end portion 41a, an enclosed portion 41f surrounding the pin hole 41c is formed.

Meanwhile, at the leading end portion of the rail side end portion 41b, that is, at the end portion of an opposite side of the side in which the frame side end portion 41a is positioned, a pin hole 41d for fitting a sixth shaft pin 66 to be described later is formed. When the sixth shaft pin 66 is inserted into both the pin hole 41d and the link support hole (not illustrated) formed in the link support protrusion 4d of the movable rail 4a and is assembled to the movable rail 4a, the revolving portion 41 is supported in a state that is capable of relatively revolving with respect to the movable rail 4a around the sixth shaft pin 66.

In addition, in order to support each revolving portion 41 in a state that is capable of relatively revolving with respect to the movable rail 4a, the bush or sleeve made of metal is embedded in the leading end portion of the rail side end portion 41b so as to be located inside the pin hole 41d, and the sixth shaft pin 66 of a state of being inserted into both the pin hole 41d and the link support hole (not illustrated) may be laser-welded to the bush or the sleeve.

Since the pair of revolving portions 41 and 41 configured as described above is connected by the connecting pipe 42, when revolving, both the pair of revolving portions 41 and 41 integrally revolve. In this embodiment, a circular through hole 41e is formed in the bent portion of each of the revolving portions 41, and the connecting pipe 42 is disposed such that the internal space thereof communicates with the through hole 41e.

According to the operation of the height adjustment mechanism 5 configured as described above, it is possible to move the upper and lower positions of the vehicle seat S from the normal position illustrated in Fig. 6 to the raised position illustrated in Fig. 7, or on the contrary, it is possible to return the upper and lower positions from the raised position to the normal position.

To be more specific, when the pinion gear 25 supported at a predetermined position of the vehicle seat S in a freely rotatable manner is rotated by actuation of an actuating lever (not illustrated), driving force is transmitted to the gear portion 31a of the sector gear 31 meshed with the pinion gear 25. By the driving force, the sector gear 31 relatively revolves with respect to the pinion gear 25 around the first shaft pin 61. Thus, the first revolving arm 33 relatively revolves with respect to the movable rail 4a around the second shaft pin 62, and in conjunction therewith, the second revolving arm 34 relatively revolves with respect to the movable rail 4a around the fourth shaft pin 64. That is, the entire rear side link 30 revolves with respect to the movable rail 4a in the vertical direction and the front to back direction.

Moreover, by the revolving of the rear side link 30, the vehicle seat S including the pinion gear 25 vertically moves while swinging. In other words, the first revolving arm 33 relatively revolves with respect to the seat cushion frame 2 around the first shaft pin 61, and the second revolving arm 34 relatively revolves with respect to the seat cushion frame 2 around the third shaft pin 63.

Meanwhile, the front side link 40 revolves with respect to the movable rail 4a in the vertical direction and the front to back direction while following the movement of the seat cushion frame 2. In other words, the revolving portion 41 of the front side link 40 relatively revolves with respect to the movable rail 4a around the sixth shaft pin 66. In this case, the revolving portion 41 relatively revolves with respect to the seat cushion frame 2 around the fifth shaft pin 65.

### «Structure for Assembling Assembly Target Member»

In the above-described vehicle seat S, the rear side link 30 and the front side link 40 are assembled to the one-end-side frame 6a and the other-end-side frame 6b made of CFRP in the seat cushion frame 2. That is, the rear side link 30 and the front side link 40 correspond to the assembly target member of the present invention, and the one-end-side frame 6a and the other-end-side frame 6b correspond to the resin molding portion of the present invention.

Furthermore, in this embodiment, the rear side link 30 has a metallic sector gear 31 embedded in the one-end-side frame 6a, and a metal bush 71 as a metal portion embedded in the other-end-side frame 6b, and is assembled to the seat cushion frame 2 by the portion in which the sector gear 31 and the metal bush 71 are provided. Similarly, the front side link 40 has a metal bush 72 as a metal portion embedded in the revolving portion 41, and is assembled to the seat cushion frame 2 by the portion in which the metal bush 72 is provided.

That is, in this embodiment, since the jointing portion of the assembly target member side is made of metal, the jointing portion of the seat cushion frame 2 side is made of a resin material, specifically, CFRP, it is difficult to join the jointing portions by welding. Meanwhile, as described in the section of problems to be resolved by the invention, in a case where the assembly target member is assembled to the seat cushion frame 2 by a bolt, when the jointing portion of the seat cushion frame 2 side is made of a resin material, it is apprehended that the jointing portion is deformed such that a portion pressed against the bolt head is recessed.

Therefore, in this embodiment, when assembling the metal portion of the assembly target member to the one-end-side frame 6a and the other-end-side frame 6b made of CFRP in the seat cushion frame 2, the assembly structure is adopted to suppress the deformation of the one-end-side frame 6a and the other-end-side frame 6b. Hereinafter, the assembly structure will be described in detail.

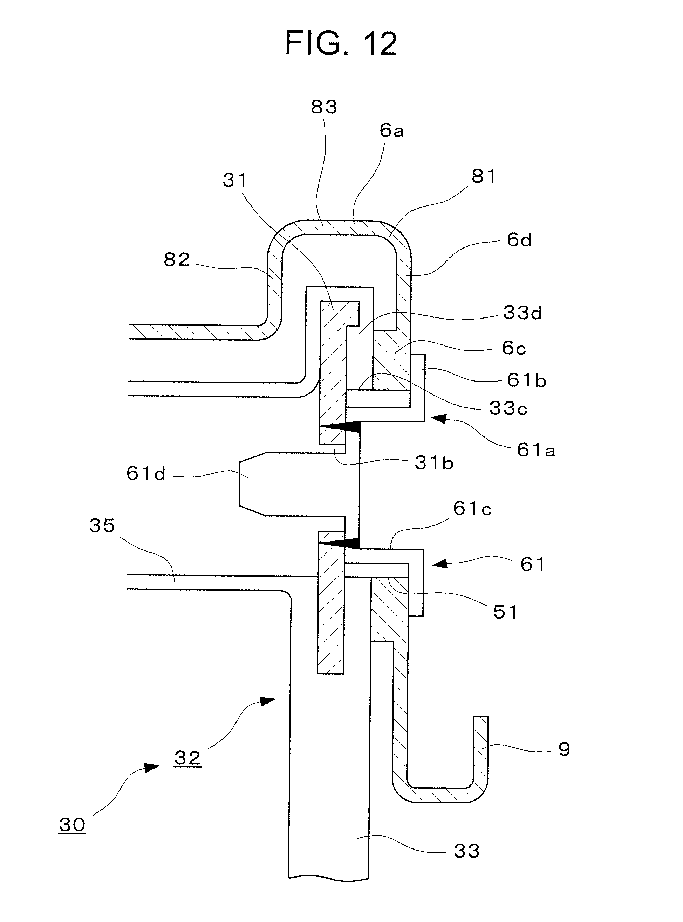

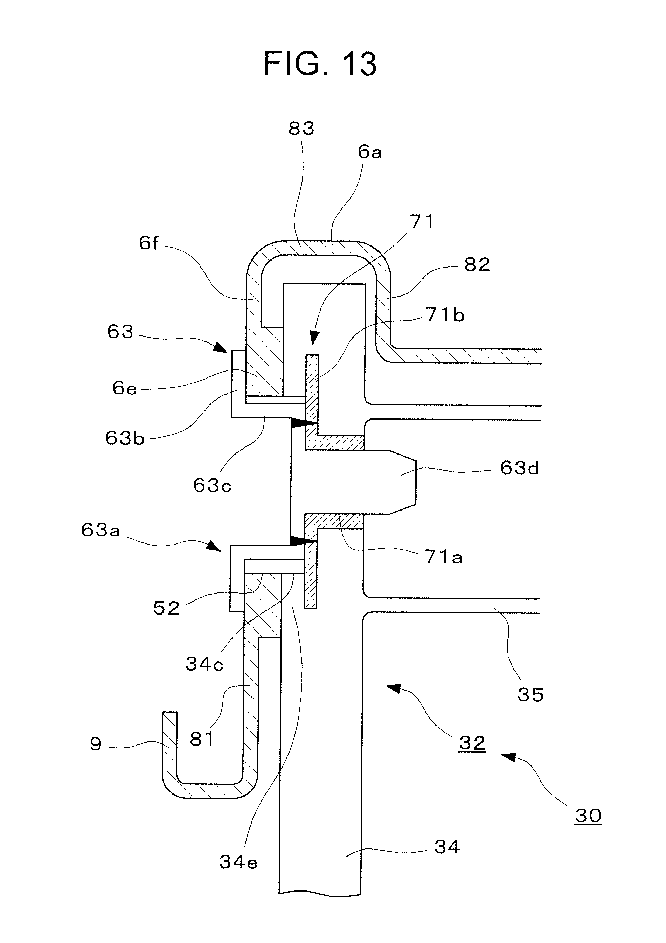

First, the assembly structure of the rear side link 30 with respect to the seat cushion frame 2 will be described with reference to Figs. 12 and 13.

As illustrated in Fig. 12, the first revolving arm 33 of the rear side link 30 is assembled to the front end portion of the one-end-side frame 6a of the seat cushion frame 2. To be specific, the one-end-side frame 6a has an inverse U shape as described above, has an outer wall 81, an inner wall 82, and a ceiling wall 83 that connects the upper end portions of both walls 81 and 82, and the first revolving arm 33 is disposed such that the frame side end portion 33a is positioned in a space surrounded by the walls 81, 82 and 83.

In more detail, the outer wall 81 of the one-end-side frame 6a is formed with a link assembling hole 51 as a first hole passing through the outer wall 81. Here, any hole corresponding to the first hole including the link assembling hole 51 is formed as a through hole. Meanwhile, an exposure hole 33c is formed at the frame side end portion 33a of the first revolving arm 33, and in the side surface of the sector gear 31 embedded in the first revolving arm 33, the pin hole 31b and its outer peripheral portion are exposed by the exposure hole 33c. Here, the pin hole 31b corresponds to the second hole of the present invention, and is a through hole in this embodiment.

Moreover, the first revolving arm 33 is disposed at a position in which the pin hole 31b as the second hole communicates with the link assembling hole 51 of the one-end-side frame 6a. In other words, the first revolving arm 33 of the rear side link 30 is assembled to the one-end-side frame 6a of the seat cushion frame 2 at the position in which the pin hole 31b of the sector gear 31 communicates with the link assembling hole 51.

In this embodiment, in order to assemble the first revolving arm 33 at the attachment position as described above, the first shaft pin 61 made of metal is inserted to both the link assembling hole 51 and the pin hole 31b of the state of communicating with each other. The first shaft pin 61 corresponds to an example of a shaft-shaped member of the present invention, a flange portion 61b as the flange portion is provided on the outer peripheral portion of the top portion 61a, and the flange portion 61b has an outer diameter that is somewhat larger than the diameter of the link assembling hole 51. Thus, when inserted into both the link assembling hole 51 and the pin hole 31b from the outside in the widthwise direction of the one-end-side frame 6a, the flange portion 61b is locked to a locking portion 6c formed around the link assembling hole 51 of the one-end-side frame 6a.

In a state in which the flange portion 61b is locked to the locking portion 6c, as illustrated in Fig. 12, the locking portion 6c of the one-end-side frame 6a and the enclosed portion 33d surrounding the exposure hole 33c of the first revolving arm 33 are interposed between the sector gear 31 and the flange portion 61b in the widthwise direction. In other words, the locking portion 6c of the one-end-side frame 6a is interposed between the enclosed portion 33d provided on the first revolving arm 33 of the rear side link 30 and the flange portion 61b, in the state of locking the flange portion 61b. Meanwhile, the enclosed portion 33d is interposed between the sector gear 31 and the locking portion 6c in the state in which the locking portion 6c locks the flange portion 61b.

Moreover, in this embodiment, in the state in which the flange portion 61b is locked to the locking portion 6c, the first shaft pin 61 is fixed to the outer peripheral portion of the pin hole 31b of the sector gear 31 by laser welding. In this way, in this embodiment, the first revolving arm 33 is assembled to the one-end-side frame 6a by laser welding the first shaft pin 61 to the sector gear 31. Thus, in the seat cushion frame 2, when the rear side link 30 is assembled to the one-end-side frame 6a made of CFRP by the portion provided with the sector gear 31, since a fastening member such as a bolt is not used, it is possible to suppress the one-end-side frame 6a from being deformed by the force from the fastening member.

The structure for welding the first shaft pin 61 to the sector gear 31 will be described in detail. As illustrated in Fig. 12, the top portion 61a of the first shaft pin 61 has a flange portion 61b, and a recess portion 61c as a non-flange portion located inside the flange portion 61b. The recess portion 61c is a portion that is recessed in a substantially cylindrical shape along the link assembling hole 51 in a state in which the first shaft pin 61 is inserted into both the link assembling hole 51 and the pin hole 31b. Furthermore, the recess portion 61c has an outer diameter that is somewhat larger than the outer diameter of the pin main body 61d located on the opposite side of the top portion 61a in the first shaft pin 61.

Moreover, in a state in which the flange portion 61b is locked by the locking portion 6c, the bottom surface of the recess portion 61c comes into contact with the sector gear 31, specifically, the outer peripheral portion of the pin hole 31b, and the first shaft pin 61 is laser-welded at a portion (in Fig. 12, a position added with a triangular mark) that comes into contact with the sector gear 31 in the recess portion 61c. That is, in this embodiment, the welding position of the first shaft pin 61 to the sector gear 31 is located in a portion that is adjacent to the sector gear 31 in the recess portion 61c. Thus, in this embodiment, it is possible to satisfactorily perform the laser welding of the first shaft pin 61 to the sector gear 31.

To be more specific, when performing the laser welding, it is desired that an interval between the irradiation position of the laser and the welding position be short. According to the above-described configuration, in the first shaft pin 61, since the bottom of the recess portion 61c recessed along the link assembling hole 51 is irradiated with laser to perform welding, the interval between the irradiation position and the welding position becomes shorter as much as the recess, and thus, the laser welding is favorably performed. In the case of laser welding, since it is possible to check the welding position by checking the laser irradiation position, the welding operation becomes easier. In addition, since it is possible to reduce the thickness of the central portion of the top portion 61a of the first shaft pin 61 as much as the recess, it is also possible to reduce the weight of the vehicle seat S.

The first revolving arm 33 is assembled to the one-end-side frame 6a in this way. In the state after completion of assembly, the flange portion 61b of the first shaft pin 61 is locked to the locking portion 6c provided at the one-end-side frame 6a, and the locking portion 6c and the enclosed portion 33d surrounding the exposure hole 33c in the first revolving arm 33 are interposed between the sector gear 31 and the flange portion 61b in the widthwise direction. Here, the locking portion 6c of the one-end-side frame 6a is formed to be thicker than the adjacent portion 6d that is adjacent to the locking portion 6c, and protrudes to the first revolving arm 33 side from the adjacent portion 6d in the widthwise direction, in other words, to the sector gear 31 side.

That is, in this embodiment, in the one-end-side frame 6a, the locking portion 6c for locking the flange portion 61b is formed to be thicker than the adjacent portion 6d as an unlocked portion. Since the locking portion 6c is thicker than the adjacent portion 6d in this way, it is possible to stably keep the state in which the locking portion 6c locks the flange portion 61b.

Furthermore, in the state in which the first revolving arm 33 is assembled to the one-end-side frame 6a, since the locking portion 6c of the one-end-side frame 6a protrudes to the first revolving arm 33 side from the adjacent portion 6d in the widthwise direction, in the locking portion 6c and the adjacent portion 6d, only the locking portion 6c comes into contact with the first revolving arm 33. Thus, in this embodiment, the contact resistance occurring between the first revolving arm 33 and the one-end-side frame 6a decreases as compared to the case where both the locking portion 6c and the adjacent portion 6d are in contact with each other, and as a result, the first revolving arm 33 is able to more smoothly operate when relatively revolving with respect to the one-end-side frame 6a.

Meanwhile, in a state in which the first revolving arm 33 is assembled to the one-end-side frame 6a, the locking portion 6c comes into contact with the enclosed portion 33d made of above-described CFRP in the first revolving arm 33. In other words, in the state in which the locking portion 6c locks the flange portion 61b, the enclosed portion 33d of the first revolving arm 33 is located at a position interposed between the sector gear 31 and the locking portion 6c. If a contact portion with the locking portion 6c is made of CFRP, it is possible to reduce abrasion of the locking portion 6c.

However, without being limited thereto, the overall outer surface of the sector gear 31 may be exposed, and the locking portion 6c may come into contact with the exposed outer surface, that is, the surface of the metal.

Furthermore, in a state in which the first shaft pin 61 is inserted into both the link assembling hole 51 and the pin hole 31b, a slight clearance (play) is provided between the outer peripheral surface of the recess portion 61c of the first shaft pin 61 and each of abyss of the link assembling hole 51 and the pin hole 31b. Since the clearance is provided, the first revolving arm 33 is able to more smoothly operate when relatively revolving with respect to the one-end-side frame 6a.

Furthermore, in the state in which the first shaft pin 61 is inserted into both the link assembling hole 51 and the pin hole 31b, as illustrated in Fig. 12, the leading end portion of the pin main body 61d of the first shaft pin 61 protrudes from the pin hole 31b and is located in the internal space of the connecting pipe 35. In this embodiment, since the portion of the first shaft pin 61 protruding from the pin hole 31b can be housed in the internal space of the connecting pipe 35, it is possible to reduce the size of the vehicle seat S accordingly.

In addition, the leading end portion of the pin main body 61d of the first shaft pin 61 protruding from the pin hole 31b may be disposed at a position overlapping the connecting pipe 35 in the widthwise direction, without being limited to the case of being located in the internal space of the connecting pipe 35. According to such a configuration, since it is possible to bring the first shaft pin 61 closer to the internal space of the connecting pipe 35 in the widthwise direction, it is possible to reduce the size of the vehicle seat S, as compared to the case where the leading end portion of the first shaft pin 61 is disposed at a position that does not overlap the connecting pipe 35 in the widthwise direction. However, from the viewpoint of reducing the size of the vehicle seat S, it is desirable to provide a configuration in which the leading end portion of the first shaft pin 61 protruding from the pin hole 31b is positioned in the internal space of the connecting pipe 35.

Incidentally, in this embodiment, the cross-sectional shape (shape of the cross-section in which the widthwise direction is set as the normal direction) of the pin main body 61d of the first shaft pin 61 is circular, but is not limited to this, and the cross-sectional shape may be other shapes, for example, a rectangular shape.

Furthermore, as described above, in the lower end portion of the outer peripheral surface of the seat cushion frame 2, from the purpose of securing the rigidity, the bent portion 9 is provided all over the outer peripheral surface (strictly, the entire periphery except the rear-end-side). That is, the bent portion 9 is formed over the rear end from the front end of the one-end-side frame 6a.

Meanwhile, when the one-end-side frame 6a is viewed from the lateral side, in other words, from the widthwise direction, the link assembling hole 51 is formed at the position that does not overlap the bent portion 9. That is, in this embodiment, as viewed from the widthwise direction, the link assembling hole 51 corresponding to the first hole is formed at a position deviated from the position in which the bent portion 9 is provided in the one-end-side frame 6a. Accordingly, even when the bent portion 9 is formed in the one-end-side frame 6a, since the link assembling hole 51 is formed at a position deviated from the position in which the bent portion 9 is provided, when the first shaft pin 61 is inserted into the link assembling hole 51, it does not interfere with the bent portion 9, and the workability is improved.

In this embodiment, as illustrated in Fig. 12, between the outer surface of the one-end-side frame 6a and the folded portion of the bent portion 9 in the widthwise direction, the top portion 61a of the first shaft pin 61, more specifically, the flange portion 61b is disposed. Since the top portion 61a of the first shaft pin 61 is housed between the outer surface of the one-end-side frame 6a and the bent portion 9, the size of the vehicle seat S is reduced accordingly.

Furthermore, in this embodiment, the rear end portions of the one-end-side frame 6a and the other-end-side frame 6b are connected by the rear-end-side connection portion 7, and the side frame 22 of the seat back frame 1 is assembled to the portion located on the rear-end-side of the rear-end-side connection portion 7, in the rear end portions of each of the one-end-side frame 6a and the other-end-side frame 6b.

Meanwhile, the link assembling hole 51 is formed at the rear end portion of the one-end-side frame 6a. In this embodiment, as described above, the rear end portion of the rear-end-side connection portion 7 extends toward the side frame 22 of the seat back frame 1 in the state of being assembled to the rear end portions of each of the one-end-side frame 6a and the other-end-side frame 6b. By such a configuration, even when forming the link assembling hole 51, since the rear-end-side connection portion 7 having a shape extending toward the side frame 22 is provided, it is possible to compensate for the rigidity of the rear end portion of the one-end-side frame 6a, in particular, the periphery of the part to which the side frame 22 of the seat back frame 1 is assembled.

By the above-described configuration, the first revolving arm 33 of the rear side link 30 is assembled to the one-end-side frame 6a of the seat cushion frame 2. By substantially the same configuration as the above-described configuration, the second revolving arm 34 is assembled to the front end portion of the other-end-side frame 6b.

To be specific, the second revolving arm 34 is disposed so that the frame side end portion 34a is positioned inside the space surrounded by the outer wall 81, the inner wall 82, and the ceiling wall 83 of the inverse U-shaped other-end-side frame 6b. In the second revolving arm 34 at such an arrangement position, the pin hole 34c formed on the frame side end portion 34a, more specifically, the through hole 71a of the metal bush 71 communicates with the link assembling hole 52 formed at the other-end-side frame 6b. That is, the second revolving arm 34 is assembled to the other-end-side frame 6b at the position in which the pin hole 34c communicates with the link assembling hole 52. Here, the link assembling hole 52 corresponds to the first hole of the present invention, and the pin holes 34c corresponds to the second hole of the present invention.

Moreover, after assembling the second revolving arm 34 at the above-described assembly position, the third shaft pin 63 made of metal is inserted into both the link assembling hole 52 and the pin hole 34c of the state of communicating with each other. The third shaft pin 63 is another example of a shaft-shaped member of the present invention, similarly to the first shaft pin 61, a flange portion 63b as the flange portion is provided on the outer peripheral portion of the top portion 63a, and when the third shaft pin 63 is inserted into both the link assembling hole 52 and the pin hole 34c from the outside in the widthwise direction of the other-end-side frame 6b, the flange portion 63b is locked to the locking portion 6e formed around the link assembling hole 52 of the other-end-side frame 6b.

In a state in which the flange portion 63b is locked to the locking portion 6e, as illustrated in Fig. 13, the locking portion 6e of the other-end-side frame 6b and the enclosed portion 34e surrounding the pin hole 34c in the second revolving arm 34 are interposed between the flange portion (hereinafter, a bush side flange portion) 71b of the metal bush 71 and the flange portion 63b of the third shaft pin 63 in the widthwise direction. In addition, the top portion 63a of the third shaft pin 63 has a recess portion 63c on the inner side of the flange portion 63b. The recess portion 63c is a portion that is recessed in a substantially cylindrical shape along the link assembling hole 52 in the state in which the third shaft pin 63 is inserted into both the link assembling hole 52 and the pin hole 34c, and the bottom surface of the recess portion 63c abuts against the bush side flange portion 71b of the exposed metal bush 71, in a state in which the flange portion 63b is locked by the locking portion 6e.

Moreover, the third shaft pin 63 is fixed to the metal bush 71 by being laser-welded at the abutment portion with the bush side flange portion 71b in the recess portion 63c (in Fig. 13, a position added with a triangular mark). That is, the welding position of the third shaft pin 63 to the metal bush 71 is located at a portion of the recess portion 63c that is adjacent to the bush side flange portion 71b of the metal bush 71. Thus, similarly to the case of the first shaft pin 61, it is possible to favorably perform the laser welding of the third shaft pin 63 to the metal bush 71.

The second revolving arm 34 is assembled to the other-end-side frame 6b as described above, and in the state after completion of assembly, the flange portion 63b of the third shaft pin 63 is locked to the locking portion 6e provided on the other-end-side frame 6b. Here, the locking portion 6e of the other-end-side frame 6b is formed to be thicker than the adjacent portion 6f that is adjacent to the locking portion 6e, and protrudes to the second revolving arm 34 side from the adjacent portion 6f in the widthwise direction, in other words, to the metal bush 71 side. Since the locking portion 6e is thicker than the adjacent portion 6f, it is possible to stably keep the state in which the locking portion 6e locks the flange portion 63b.

Furthermore, since the locking portion 6e protrudes to the second revolving arm 34 side from the adjacent portion 6f in the widthwise direction, in the locking portion 6e and the adjacent portion 6f, only the locking portion 6e comes into contact with the second revolving arm 34. As a result, the contact resistance between the second revolving arm 34 and the other-end-side frame 6b decreases, and the second revolving arm 34 smoothly revolves relatively with respect to the other-end-side frame 6b.

Meanwhile, in a state in which the second revolving arm 34 is assembled to the other-end-side frame 6b, the locking portion 6e comes into contact with the outer peripheral portion of the pin hole 34c in the second revolving arm 34, that is, the enclosed portion 34e. Here, since the enclosed portion 34e is made of CFRP, it is possible to reduce abrasion of the locking portion 6e by the revolving operation of the second revolving arm 34.

Furthermore, in a state in which the third shaft pin 63 is inserted into both the link assembling hole 52 and the pin hole 34c, as illustrated in Fig. 13, the leading end portion of the pin main body 63d of the third shaft pin 63 protrudes from the pin hole 34c, and is located in the internal space of the connecting pipe 35. Thus, since it is possible to house the portion of the third shaft pin 63 protruding from the pin hole 34c within the internal space of the connecting pipe 35, it is possible to reduce the size of the vehicle seat S accordingly.

In addition, similar to the one-end-side frame 6a, the other-end-side frame 6b is formed with the bent portion 9 from the front end to the rear end, and when the other-end-side frame 6b is viewed from the widthwise direction, the link assembling hole 52 is formed at a position deviated from the position in which the bent portion 9 of the other-end-side frame 6b is provided. Thus, when inserting the third shaft pin 63 into the link assembling hole 52, it does not interfere with the bent portion 9, and the workability is improved.

In this embodiment, as illustrated in Fig. 13, the flange portion 61b of the third shaft pin 63 is disposed between the outer surface of the other-end-side frame 6b and the folded portion of the bent portion 9 in the widthwise direction. Since the top portion 63a of the third shaft pin 63 is housed between the outer surface of the other-end-side frame 6b and the bent portion 9, the size of the vehicle seat S is reduced accordingly.

Furthermore, the link assembling hole 52 is formed at the rear end portion of the other-end-side frame 6b. Meanwhile, as described above, the rear-end-side connection portion 7 is provided at the rear end portion of the other-end-side frame 6b, and the rear end portion of the rear-end-side connection portion 7 extends toward the side frame 22 of the seat back frame 1 of the state of being assembled to the rear end portions of each of the one-end-side frame 6a and the other-end-side frame 6b. By such a configuration, even if the link assembling hole 52 is formed, since the rear-end-side connection portion 7 having the above-described shape is provided, it is possible to compensate for the rigidity of the rear end portion of the other-end-side frame 6b, in particular, the periphery of the part to which the side frame 22 of the seat back frame 1 is assembled.

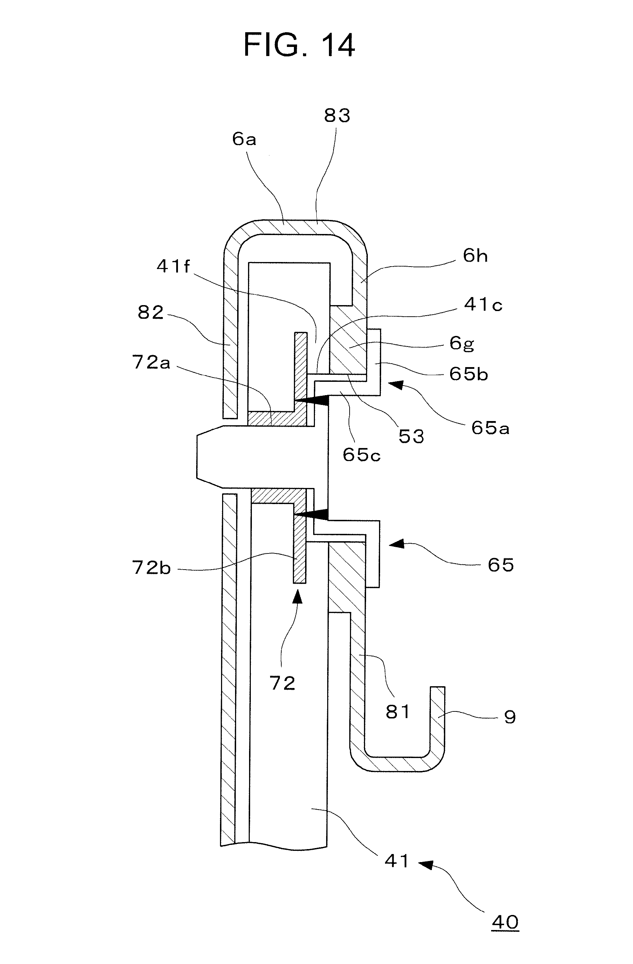

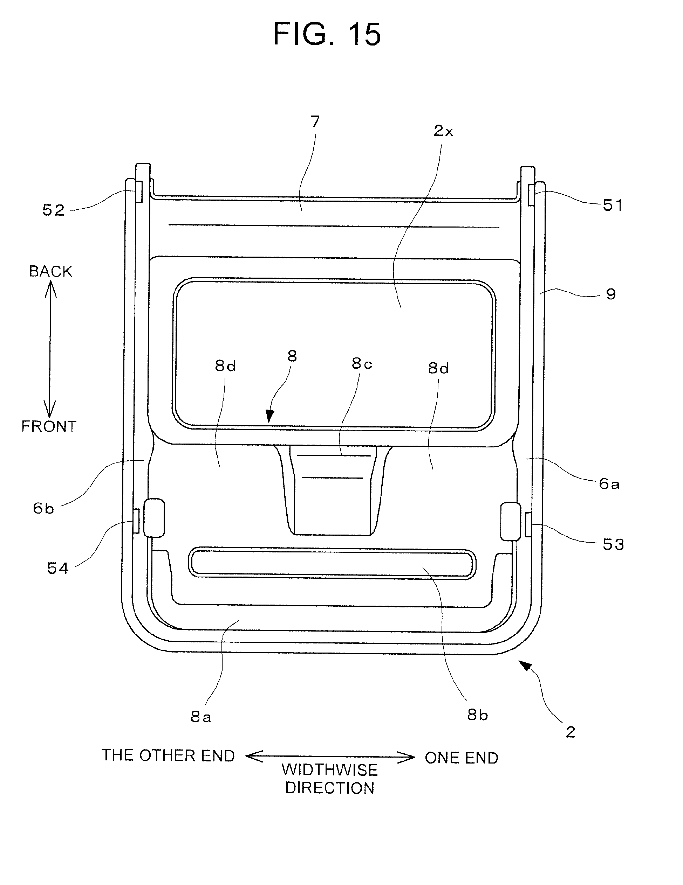

Next, the assembly structure of the front side link 40 to the seat cushion frame 2 will be described with reference to Figs. 14 and 15.

In the pair of revolving portions 41 provided at both ends of the front side link 40, the revolving portion 41 located on the one-end-side in the widthwise direction is assembled to the front end portion of the one-end-side frame 6a of the seat cushion frame 2, and the revolving portion 41 located on the other-end-side in the widthwise direction is assembled to the front end portion of the other-end-side frame 6b. Since the assembly structure of the revolving portion 41 of the one-end-side and the assembly structure of the revolving portion 41 of the other-end-side are symmetrical and substantially similar to each other, only the assembly structure of the revolving portion 41 of the one-end-side will be described hereinbelow.

The revolving portion 41 of the one-end-side is disposed so that the frame side end portion 41a is positioned within a space surrounded by the outer wall 81, the inner wall 82, and the ceiling wall 83 of the one-end-side frame 6a having an inverse U shape. In the revolving portion 41 located at such a position, the pin hole 41c formed on the frame side end portion 41a, more specifically, the through hole 72a of the metal bush 72 communicates with the link assembling hole 53 formed on the one-end-side frame 6a. That is, the revolving portion 41 of the one-end-side is assembled to the one-end-side frame 6a at the position in which the pin hole 41c communicates with the link assembling hole 53. Here, the link assembling hole 53 corresponds to the first hole of the present invention, and the pin hole 41c corresponds to the second hole of the present invention.

Moreover, when the revolving portion 41 is assembled to the assembly position, the fifth shaft pin 65 made of metal is inserted into both the link assembling hole 53 and the pin hole 41c of the state of communicating with each other. The fifth shaft pin 65 is another example of a shaft-shaped member of the present invention, similar to the first shaft pin 61 and the third shaft pin 63, the flange portion 65b as the flange portion is provided on the outer peripheral portion of the top portion 65a, and when the fifth shaft pin 65 is inserted into both the link assembling hole 53 and the pin hole 41c from the outside in the widthwise direction of the one-end-side frame 6a, the flange portion 65b is locked to the locking portion 6g formed around the link assembling hole 53 of the one-end-side frame 6a.

In a state in which the flange portion 65b is locked to the locking portion 6g, as illustrated in Fig. 14, the locking portion 6g of the one-end-side frame 6a and the enclosed portion 41f surrounding the pin hole 41c of the revolving portion 41 are interposed between the flange portion (hereinafter, a bush side flange portion) 72 of the metal bush 72 in the widthwise direction and the flange portion 65b of the fifth shaft pin 65. In addition, the top portion 65a of the fifth shaft pin 65 has a recess portion 65c on the inner side of the flange portion 65b. The recess portion 65c is a portion that is recessed in a substantially cylindrical shape along the link assembling hole 53 in the state in which the fifth shaft pin 65 is inserted into both the link assembling hole 53 and the pin hole 41c, and the bottom surface of the recess portion 65c abuts against the bush side flange portion 72b of the exposed metal bush 72, in a state in which the flange portion 65b is locked by the locking portion 6g.

Moreover, the fifth shaft pin 65 is fixed to the metal bush 72 by being laser-welded at the abutment portion (in Fig. 14, a position added with a triangular mark) with the bush side flange portion 72b in the recess portion 65c. That is, the welding position of the fifth shaft pin 65 to the metal bush 72 is located at a portion of the recess portion 65c that is adjacent to the bush side flange portion 72b of the metal bush 72. Thus, it is possible to favorably perform the laser welding of the fifth shaft pin 65 to the metal bush 72.

The revolving portion 41 of the one-end-side is assembled to the one-end-side frame 6a as described above, and in the state after completion of assembly, the flange portion 65b of the fifth shaft pin 65 is locked to the locking portion 6g provided on the one-end-side frame 6a. The locking portion 6g is formed to be thicker than the adjacent portion 6h that is adjacent to the locking portion 6g, and protrudes to the revolving portion 41 side from the adjacent portion 6h in the widthwise direction, in other words, to the metal bush 72 side. Thus, it is possible to stably keep the state in which the locking portion 6g locks the flange portion 65b, and in the locking portion 6g and the adjacent portion 6h, only the locking portion 6g comes into contact with the revolving portion 41. As a result, the contact resistance between the revolving portion 41 and the one-end-side frame 6a decreases, and the revolving portion 41 smoothly revolves relatively with respect to the one-end-side frame 6a.

Meanwhile, in a state in which the revolving portion 41 of the one-end-side is assembled to the one-end-side frame 6a, the locking portion 6g comes into contact with the outer peripheral portion of the pin hole 41c in the revolving portion 41, that is, the enclosed portion 41f, and since the enclosed portion 41f is made of CFRP, it is possible to reduce abrasion of the locking portion 6g due to the revolving operation of the revolving portion 41.

Furthermore, as described above, at the one-end-side frame 6a, the bent portion 9 is formed from its front end to the rear end, and when the one-end-side frame 6a is viewed from the widthwise direction, the link assembling hole 53 is formed at a position deviated from the position in which the bent portion 9 is provided. Thus, when the fifth shaft pin 65 is inserted to the link assembling hole 53, it does not interfere with the bent portion 9, and the workability is improved.

However, as described above, the seat cushion frame 2 has a front-end-side connection portion 8 that connects the front end portions of the one-end-side frame 6a and the other-end-side frame 6b, and a concave portion 8c having a substantially square shape as viewed in a plan view formed to be recessed downward is provided at the rear end portion of the front-end-side connection portion 8. Moreover, in this embodiment, as illustrated in Fig. 15, the link assembling hole 53 formed at the one-end-side frame 6a is formed within a range in which the concave portion 8c is provided in the front to back direction of the vehicle seat S. Since the link assembling hole 53 is formed at the same position as the concave portion 8c in the front to back direction in the seat cushion frame 2 in this manner, the portion formed with the link assembling hole 53 in the one-end-side frame 6a is supported by the portion having high rigidity in the front-end-side connection portion 8, specifically, the rear end portion provided with the concave portion 8c. That is, the support rigidity of the portion formed with the link assembling hole 53 in the one-end-side frame 6a is improved.

### «Modified Example of Seat Cushion Frame»

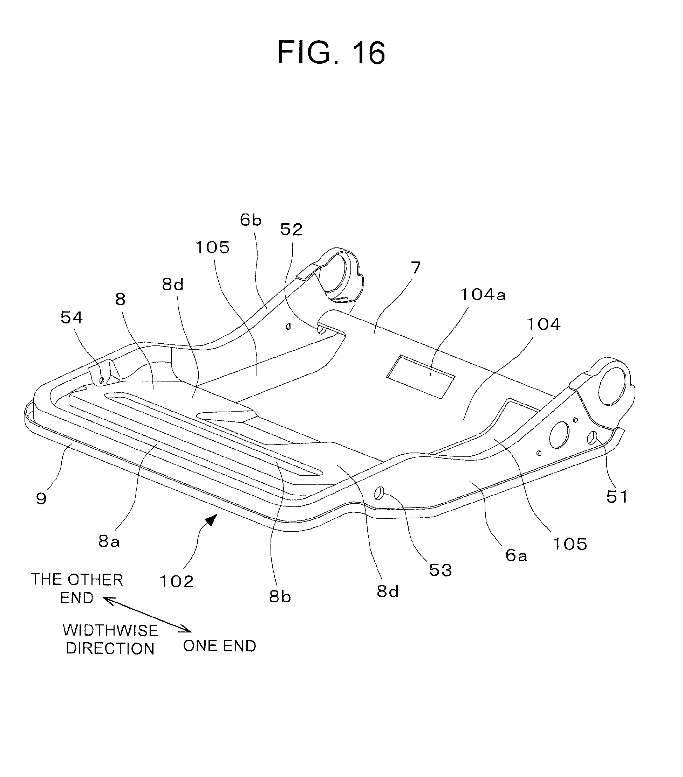

In the above-described embodiment (hereinafter, this example), the seat cushion frame 2 having a substantially square shape as viewed in a plan view has been described. That is, the seat cushion frame 2 according to this example has an opening 2X having a rectangular shape as viewed in a plan view inside, and supports the buttocks of the occupant seated on the vehicle seat S by an S spring or the like laid above the opening 2X. However, the invention is not limited to this, and as illustrated in Fig. 16, the present invention can also be applied to a seat cushion frame 102 equipped with a buttocks supporting portion 104 that supports the buttocks of the occupant.

A configuration of the seat cushion frame 102 according to a modified example will be described below with reference to Fig. 16. In addition, in Fig. 16, the parts denoted by the same reference numerals as those of Figs. 2 to 15 have the same configuration as this example, and will not be described in the following description.

The seat cushion frame 102 according to the modified example differs from the seat cushion frame 2 according to this example in that the former has a buttocks supporting portion 104 as described above. The buttocks supporting portion 104 is a portion that has a substantially rectangular shape as viewed in a plan view that connects the central portions in the widthwise direction of the rear-end-side connection portion 7 and the front-end-side connection portion 8 along the front to back direction, and is integrally molded with each part of the seat cushion frame 102 by CFRP.

To be more specific, the buttocks supporting portion 104 is a plate-shaped portion that is located between the one-end-side frame 6a and other-end-side frame 6b in the widthwise direction of the seat cushion frame 102, and extends along the front to back direction. The upper surface of the buttocks supporting portion 104 serves as a support surface configured to support the buttocks of the occupant seated on the vehicle seat S, and is curved to fit the buttocks of the occupant during support. In addition, as illustrated in Fig. 16, at the rear end portion of the buttocks supporting portion 104, a rectangular hole 104a is formed at the central portion in the widthwise direction.

Moreover, the width (length in the widthwise direction) of the buttocks supporting portion 104 is set to be somewhat shorter than the width of the rear-end-side connection portion 7 and the front-end-side connection portion 8. For this reason, at both side positions of the buttocks supporting portion 104, slits 105 and 105 along the front to back direction is formed. In other words, in this modified example, the slits 105 and 105 as holes are provided among the buttocks supporting portion 104, the one-end-side frame 6a, and the other-end-side frame 6b.

Moreover, since the slits 105 and 105 are provided among the buttocks supporting portion 104, the one-end-side frame 6a, and the other-end-side frame 6b, the buttocks supporting portion 104 can be suitably bent when supporting the buttocks of the occupant seated on the vehicle seat S. As a result, the feeling of seating at the time of placing the buttocks on the buttocks supporting portion 104 is improved.

In addition, in the case illustrated in Fig. 16, the slits 105 and 105 are provided on each of the one-end-side and the other-end-side in the widthwise direction of the seat cushion frame 102 one by one, but is not limited thereto. A plurality of slits 105 may be formed on each of the one-end-side and the other-end-side in the widthwise direction. If each of the plurality of slits 105 is disposed so as to overlap in the widthwise direction, it is possible to more easily bend the buttocks supporting portion 104, and the feeling of seating can be further improved.

In addition, the slits 105 and 105 are provided between the one-end-side frame 6a and the other-end-side frame 6b in the widthwise direction. Here, the one-end-side frame 6a and the other-end-side frame 6b have the increased rigidity by being formed in an inverse U shape, and the slits 105 and 105 are provided between the portions having the increased rigidity. As a result, it is possible to suppress a decrease in rigidity of the periphery of the part in which the slits 105 and 105 are provided.

In addition, in the modified example, each of the slits 105 and 105 is formed along the front to back direction, that is, along the longitudinal direction of each of the one-end-side frame 6a and the other-end-side frame 6b. Thus, it is possible to more effectively suppress a decrease in rigidity of the periphery of the part in which the slits 105 and 105 are provided.

Meanwhile, in the seat cushion frame 102 according to the modified example, similar to this example, from the purpose of securing the rigidity, the bent portion 9 is also provided over the entire outer peripheral surface except the rear end. Since the bent portion 9 is formed from the front end to the rear end of each of the one-end-side frame 6a and the other-end-side frame 6b, each of the slits 105 and 105 is formed along the bent portion 9. Thus, it is possible to more effectively suppress a decrease in rigidity of the periphery of the part in which the slits 105 and 105 are provided.

Furthermore, since the bent portion 9 is formed from the front end to the rear end of each of the one-end-side frame 6a and the other-end-side frame 6b, the bent portion 9 is provided in a range in which the slits 105 and 105 are formed in the front to back direction. Thus, it is possible to more effectively suppress a decrease in rigidity of the periphery of the part in which the slits 105 and 105 are provided.

Furthermore, the bent portion 9 is folded upward in an L-shape and has a portion facing the outer surfaces of the one-end-side frame 6a and the other-end-side frame 6b, and if the slits 105 and 105 are formed at a position overlapping the facing portion in the vertical direction, it is possible to more effectively suppress a decrease in rigidity of the periphery of the part in which the slits 105 and 105 are provided.

In the seat cushion frame 102 of the above-described configuration, as illustrated in Fig. 16, it is desirable that the link assembling hole 51 (a first hole formed to assemble the first revolving arm 33) be formed within a range in which the slits 105 are formed in the front to back direction in the one-end-side frame 6a, and it is desirable that the bent portion 9 provided on the outer surface of the one-end-side frame 6a be formed to include the position of the link assembling hole 51 in the front to back direction. Similarly, it is desirable that the link assembling hole 52 (a first hole formed to assemble the second revolving arm 34) be formed within a range in which the slits 105 are formed in the front to back direction in the other-end-side frame 6b, and it is desirable that the bent portion 9 provided on the outer surface of the other-end-side frame 6b be formed to include the position of the link assembling hole 51 in the front to back direction.

According to the above-described configuration, rigidity of the parts formed with the link assembling holes 51 and 52 decreases due to provision of the slits 105, but since the bent portion 9 is formed to include the positions of the holes 51 and 52 in the front to back direction, it is possible to suppress the decrease in rigidity.

In addition, in the modified embodiment as described above, the respective parts of the seat cushion frame 102 including the buttocks supporting portion 104 are integrally formed, but it is not limited thereto. For example, after separately forming the upper portion (upper shell) and the lower portion (lower shell) of the seat cushion frame 102, the seat cushion frame 102 may be formed by combination of both cells. At this time, when providing a structure in which a cavity is formed between the shells, that is, a structure in which the cross-section of the seat cushion frame 102 becomes a closed cross-section, it is possible to improve the rigidity of each part of the seat cushion frame 102. In addition, if the buttocks supporting portion 104 is provided, for example, on the upper shell, it is possible to suppress a decrease in rigidity of the periphery of the part in which the slits 105 and 105 are provided.

### «Another Embodiment of Present Invention»

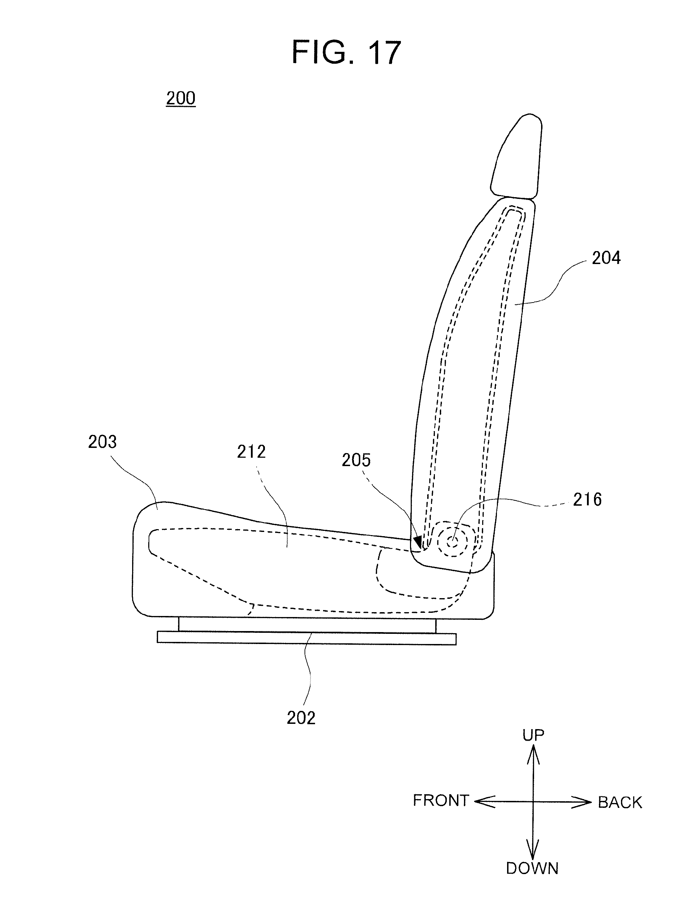

Next, as another embodiment (referred to as a second embodiment) of the present invention, an example of a configuration of a seat as an example of a device with a frame of the present invention, more particularly, a vehicle seat will be described with reference to Figs. 17 to 21.

As illustrated in Fig. 17, a vehicle seat 200 according to the second embodiment has a slide rail 202, a bottom seat 203, a backrest 204, a reclining mechanism 205 and the like. The lower end portion of the backrest 204 is connected to the rear end portion of a bottom seat 203 by the reclining mechanism 205, and the backrest 204 is erected at the rear end portion of the bottom seat 203. The backrest 204 is tiltable with respect to the bottom seat 203 in the front to back direction by the reclining mechanism 205. The reclining mechanism 205 stops the tilting movement of the backrest 204 by locking the backrest 204 to the bottom seat 203, and releases the lock to bias the backrest 204 in a direction of tilting the backrest 204 forward.

The bottom seat 203 has a pair of right and left frames 212, and a pipe-shaped connection member 216 that connects the pair of right and left frames 212. The frame 212 and the connection member 216 are connected to each other via a pin member 213 and a supporting member 214 that will be described below.

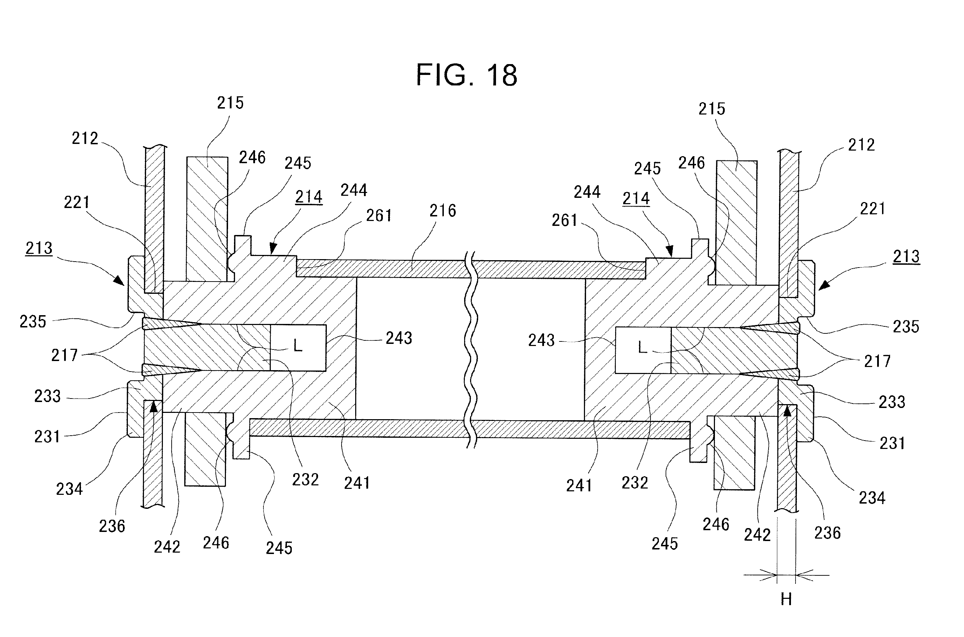

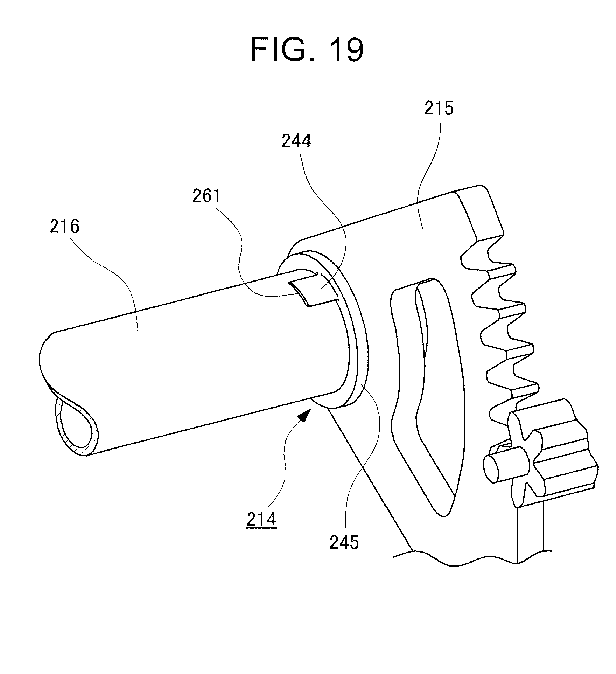

In addition, as illustrated in Figs. 18 and 19, the vehicle seat 200 according to the second embodiment has a pair of right and left frames 212, a pin member 213 as a shaft-shaped member engaged with each frame 212, a substantially cylindrical supporting member 214 that is coaxially attached to the pin member 213, and a link member 215 as a movable member that is pivotally supported by the supporting member 214 along the frame 212.

The frame 212 is a cushion frame of the vehicle seat 200 according to the second embodiment, and is molded by resin. The frame 212 is formed with a through hole 221 as a first hole to which the pin member 213 is fitted.

The pin member 213 is provided with a pin head portion 231, and a cylindrical convex portion 232 that protrudes axially from the pin head portion 231. The pin head portion 231 is provided with a fitting portion 233 that fits into a through hole 221 of the frame 212. Furthermore, a flange portion 234 is formed on an opposite side of the side on which the convex portion 232 of the pin head portion 231 is provided, and the flange portion 234 is formed with a concave portion 235 having an inner diameter larger than the outer diameter of the convex portion 232. Furthermore, the flange portion 234 is provided with a stepped portion 236 that houses the frame 212. A width H of the stepped portion 236 is set to have the same length as the thickness of the frame 212.

The supporting member 214 is attached to the pipe-shaped connection member 216 that is bridged between the right and left frames 212. The connection member 216 is assembled to the right and left frames 212 via the through hole 221. The supporting member 214 is provided with a fitting portion 241 that is fitted to the end portion of the connection member 216, a shaft portion 242 that pivotally supports the link member 215, and a concave portion 243 as a second hole into which the convex portion 232 of the pin member 213 is inserted. Moreover, the supporting member 214 corresponds to the metal portion, and forms a part of the link member 215 in the second embodiment. That is, a portion of the link member 215 other than the supporting member 214 corresponds to the link member main body as a movable member main body, and the link member main body is pivotally supported to the supporting member 214, more specifically, the shaft portion 242 of the supporting member 214.

The fitting portion 241 is formed to have a cylindrical shape, and a first protrusion 244 is provided in a part of its outer periphery. The first protrusion 244 is adapted to engage with a notch 261 provided at the end portion of the connection member 216 to restrict the rotation of the supporting member 214 in the circumferential direction. A rib 245 extending in the circumferential direction is provided at a proximal end portion of the fitting portion 241. Since the rib 245 engages with the end portion of the connection member 216, the supporting member 214 is positioned. In addition, a second protrusion 246 protruding in an arc shape is provided on an opposite side surface of the connection member 216 in the rib 245.

The shaft portion 242 is formed coaxially with the fitting portion 241 to have a cylindrical shape. The outer diameter of the shaft portion 242 is formed to be smaller than the outer diameter of the connection member 216, and to be larger than the inner diameter of the through hole 221 of the frame 212. Thus, the end surface of the shaft portion 242 abuts against the fitting portion 233 of the pin member 213 and the frame 212.

The concave portion 243 is recessed in a cylindrical shape from the one end surface of the supporting member 214 in the axial direction of the fitting portion 241 and the shaft portion 242. The concave portion 243 extends to the inner side of the end portion of the connection member 216 through the link member 215. When the convex portion 232 of the pin member 213 is engaged with the concave portion 243, the convex portion 232 faces the link member 215, and extends to the inner side from the end portion of the connection member 216. In a boundary L between the concave portion 243 and the convex portion 232 of the pin member 213, a welding mark 217 due to laser welding is formed. In order to irradiate the laser beam from the outside of the frame 212 at the time of welding, the welding mark 217 is formed in a wedge shape of having a thick outside and tapers as it goes toward the inside.

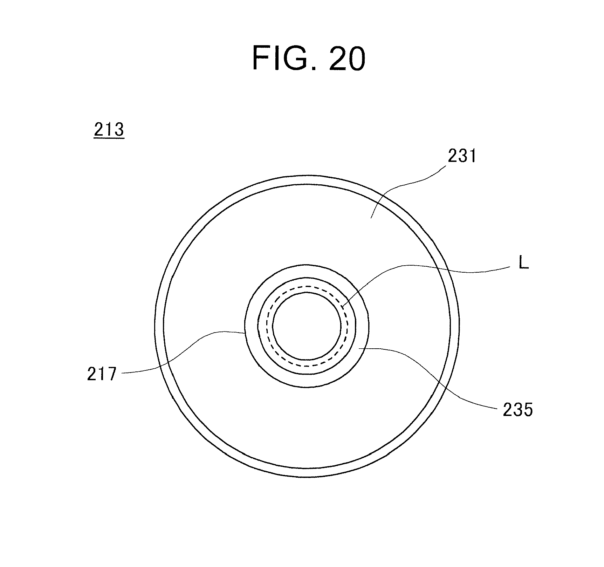

Moreover, the welding mark 217 is formed up to a position that faces the link member 215. Thus, the welding mark 217, the stepped portion 236, and the frame 212 are present on the same vertical surface (plane). In addition, as illustrated in Fig. 20, the welding mark 217 is disposed inside the concave portion 235, and is formed in a circular shape along the periphery of the convex portion 232, that is, the boundary L.

The link member 215 is, for example, a link member that forms a part of the reclining mechanism 205 of the vehicle seat 200, the height adjustment mechanism or the like. The link member 215 is pivotally supported on the shaft portion 242 of the supporting member 214, and rotates around the shaft portion 242 as a rotary shaft. One surface of the link member 215 comes into contact with the second protrusion 246 of the supporting member 214. A gap is formed between the link member 215 and the rib 245 by the second protrusion 246. By filling the adhesive inside the gap, it is possible to secure an amount of adhesive that bonds the link member 215 and the supporting member 214, and the adhesion strength between the link member 215 and the supporting member 214 increases.

As described above, according to the second embodiment, since the pin member 213 fitted to the frame 212 and the supporting member 214 configured to pivotally support the link member 215 are integrated by the welding mark 217 formed by laser welding in the boundary L between each of the convex portion 232 and the concave portion 243, it is possible to attach the supporting member 214 to the frame 212 without performing the caulking. Therefore, it is possible to suppress the deformation at the time of attaching the supporting member 214 even if the frame 212 is made of resin. Furthermore, since the pin member 213 and the supporting member 214 are integrated by welding, it is also possible to further improve the attachment rigidity of both.

Furthermore, since the concave portion 235 surrounding the welding mark 217 is formed on the opposite side of the side on which the convex portion 232 of the pin member 213 is provided, it is possible to deepen the depth of entry of the laser beam, and it is possible to easily form the welding mark 217 on the further back side. Furthermore, the convex portion 232 of the pin member 213 fitted to the concave portion 243 of the supporting member 214 extends to the position facing the link member 215, and the welding mark 217 is formed to the position facing the link member 215, the portion that supports the link member 215 is filled up with the supporting member 214, the pin member 213, and the welding mark 217. Therefore, it is possible to stably support the link member 215.

Furthermore, since the stepped portion 236 configured to house the frame 212 is formed in the flange portion 234 of the pin member 213, if the frame 212 is housed in the stepped portion 236 and interposed between the supporting member 214 and the pin member 213, it is possible to position the frame 212. Further, since the stepped portion 236, the frame 212, and the welding mark 217 are present on the same vertical surface, the frame 212 vertically receives the self-weight of the supporting member 214, the link member 215, and the connection member 216 acting on the pin member 213, and thus, it is possible to improve the attachment rigidity of the pin member 213 relative to the frame 212.

Furthermore, since the connection member 216, the supporting member 214, and the pin member 213 are coaxially disposed, it is possible to compactly assemble the members as compared to a case where each of the members is disposed on the different axes. Furthermore, since the outer diameter of the shaft portion 242 of the supporting member 214 is formed to be smaller than the outer diameter of the connection member 216, it is possible to suppress the enlargement of the supporting member 214. Furthermore, since the concave portion 243 of the supporting member 214 is provided to the inner side of the end portion of the connection member 216, it is possible to reduce the weight, while maintaining the strength of the supporting member 214 to some extent.

Furthermore, since the convex portion 232 of the pin member 213 is provided to the inner side of the end portion of the connection member 216, it is possible to increase the support rigidity of the supporting member 214 and the pin member 213 due to the support of the connection member 216.

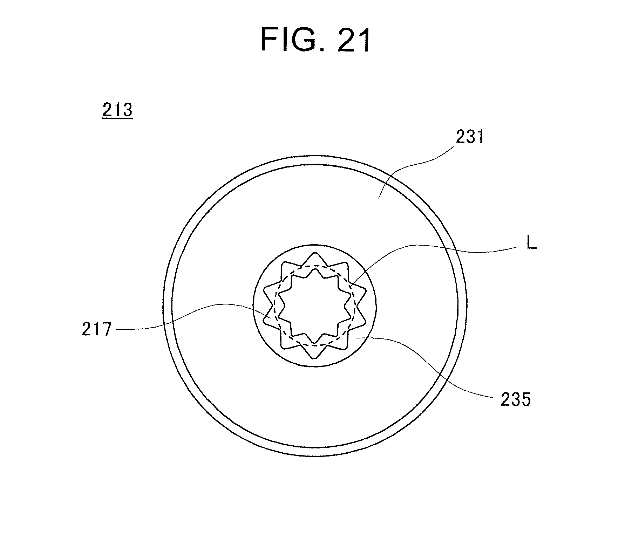

In addition, in the above-described embodiment described as the second embodiment, the description has been given of a case where the welding mark 217 is formed in a circular shape as viewed in a front view, but as illustrated in Fig. 21, a welding mark 217a may be formed in a zigzag pattern along the boundary L. When the welding mark 217a is formed in a zigzag pattern along the boundary L in this way, it is possible to increase the total length of the welding mark 217a, and to more firmly integrate the supporting member 214 and the pin member 213.

### Reference Numerals

- S: vehicle seat
- S1: seat back
- S2: seat cushion
- S3: headrest
- HP: headrest pillar
- L: boundary
- 1: seat back frame
- 2: seat cushion frame
- 2X: opening
1a, 2a, 3a cushion pad
1b, 2b, 3b surface material
- 4: slide rail mechanism
4a movable rail
4b, 4d link support protrusions
- 5: height adjustment mechanism
6a side portion frame (one-end-side frame)
6b side portion frame (the other-end-side frame)
6c, 6e, 6g locking portion
6d, 6f, 6h adjacent portion
- 7: rear-end-side connection portion
- 8: front-end-side connection portion
8a, 8b, 8c concave portion
8d leg support portion
- 9: bent portion
- 10: reclining mechanism
- 22: side frame
- 25: pinion gear
- 30: rear side link
- 31: sector gear
31a gear portion
31b pin hole
- 32: link main body
- 33: first revolving arm
33a frame side end portion
33b rail side end portion
33c exposure hole
33d enclosed portion
33e pin hole
33g retaining portion
- 34: second revolving arm
34a frame side end portion
34b rail side end portion
34c, 34d pin hole
34e enclosed portion
- 35: connecting pipe
- 40: front side link
- 41: revolving portion
41a frame side end portion
41b rail side end portion
41c, 41d pin hole
41e through hole
41f enclosed portion
- 42: connecting pipe
- 51, 52, 53, 54: link assembling hole
- 61: first shaft pin
61a top portion
61b flange portion
61c recess portion
61d pin main body
- 62: second shaft pin
- 63: third shaft pin
63a top portion
63b flange portion
63c recess portion
63d pin main body
- 64: fourth shaft pin
- 65: fifth shaft pin
65a top portion
65b flange portion
65c concave portion
- 66: sixth shaft pin
- 71, 72: metal Bush
71a, 72a through hole
71b, 72b bush side flange portion
- 81: outer wall
- 82: inner wall
- 83: ceiling wall
- 102: seat cushion frame
- 104: buttocks supporting portion
104a rectangular hole
- 105: slit
- 200: vehicle seat
- 202: slide rail
- 203: bottom seat
- 204: backrest
- 205: reclining mechanism
- 212: frame (cushion frame)
- 213: pin member
- 214: supporting member
- 215: link member
- 216: connection member
- 217: welding mark
217a welding mark
- 221: through hole
- 231: pin head portion
- 232: convex portion
- 233: fitting portion
- 234: flange portion
- 235: concave portion
- 236: stepped portion
- 241: fitting portion
- 242: shaft portion
- 243: concave portion
- 244: first protrusion
- 245: rib
- 246: second protrusion
- 261: notch

## Claims

1. A device with a frame comprising:
a frame that comprises a resin molding portion made of a resin material, and a first hole as a through hole provided in the resin molding portion;
an assembly target member which comprises a metal portion provided with a second hole, and is assembled to the resin molding portion at a position in which the second hole communicates with the first hole; and
a metallic shaft-shaped member that is inserted into both the first hole and the second hole of a state of communicating with each other to assemble the assembly target member to the resin molding portion,
wherein the shaft-shaped member comprises a flange portion locked to the resin molding portion when the shaft-shaped member is inserted to both the first hole and the second hole, and the shaft-shaped member is fixed to the metal portion by welding in a state in which the flange portion is locked to the resin molding portion.

2. The device with a frame according to claim 1,
wherein the shaft-shaped member is fixed to the metal portion by laser welding,
a top portion of the shaft-shaped member comprises the flange portion, and a non-flange portion positioned inside the flange portion,
the non-flange portion is recessed along the first hole in a state in which the shaft-shaped member is inserted into both the first hole and the second hole, and
a welding position of the shaft-shaped member to the metal portion is located in a portion of the non-flange portion that is adjacent to the metal portion.

3. The device with a frame according to claim 1 or 2,
wherein the assembly target member is a revolving element that comprises a gear as the metal portion and relatively revolves with respect to the resin molding portion by driving force transmitted to the gear,
the resin molding portion comprises a locking portion that locks the flange portion, and an adjacent portion that is adjacent to the locking portion, and
the locking portion is interposed between the revolving element and the flange portion in a state of locking the flange portion, and protrudes to the revolving element side from the adjacent portion.

4. The device with a frame according to claim 3,
wherein the revolving element further comprises a revolving element main body made of a resin material into which the gear is embedded,
the revolving element main body comprises an exposure hole for exposing an outer peripheral portion of the second hole in a side surface of the gear to the shaft-shaped member, and an enclosed portion surrounding the exposure hole, and
the enclosed portion is interposed between the gear and the locking portion in a state in which the locking portion is locked to the flange portion.

5. The device with a frame according to claim 4,
wherein the device with a frame is a vehicle seat,
a seat cushion frame as the frame comprises one-end-side frame as the resin molding portion located at one end portion in a widthwise direction of the vehicle seat, and an other-end-side frame located at an other end portion in the widthwise direction in a state of facing the one-end-side frame,
the revolving element main body comprises a first revolving arm in which the gear is embedded, a second revolving arm disposed at a position facing the first revolving arm in the widthwise direction, and a hollow connecting pipe that connects the first revolving arm and the second revolving arm,
the first revolving arm is assembled to the one-end-side frame,
the second revolving arm is assembled to the other-end-side frame, and
a leading end portion of the shaft-shaped member in the state of being inserted to both the first hole and the second hole protrudes from the second hole as a through hole, and is located at a position that overlaps the connecting pipe in the widthwise direction.

6. The device with a frame according to claim 5,
wherein a bent portion is provided in the one-end-side frame, the bent portion extending along the widthwise direction from an outer surface located outside in the widthwise direction of the one-end-side frame and then being bent to face the outer surface, and
the first hole is provided at a position deviated from a position in which the bent portion in the one-end-side frame is provided as seen from the widthwise direction.

7. The device with a frame according to claim 5 or 6,
wherein the seat cushion frame comprises a rear-end-side connection portion that connects a rear end portion of the one-end-side frame and a rear end portion of the other-end-side frame,
the seat cushion frame comprises a seat back frame that is assembled to a portion located on the rear end side from the rear-end-side connection portion, in the rear end portions of each of the one-end-side frame and the other-end-side frame,
the first hole is provided at the rear end portion of the one-end-side frame, and
the rear end portion of the rear-end-side connection portion extends toward the seat back frame of the state of being assembled to the rear end portions of each of the one-end-side frame and the other-end-side frame.

8. The device with a frame according to claim 1 or 2,
wherein the device with a frame is a vehicle seat,
the resin molding portion is one-end-side frame located at one end portion of the seat cushion frame as the frame in the widthwise direction of the vehicle seat, and the other-end-side frame located at the other end portion of the seat cushion frame in the widthwise direction in the state of facing the one-end-side frame,
the seat cushion frame comprises the one-end-side frame, the other-end-side frame, and a front-end-side connection portion that connects a front end portion of the one-end-side frame and a front end portion of the other-end-side frame,
the front-end-side connection portion is provided with a concave portion formed to be recessed downward, and
the first hole is provided within a range in which the concave portion is provided in a front to back direction of the vehicle seat, in the one-end-side frame.

9. The device with a frame according to any one of claims 1 to 4,
wherein the device with a frame is a vehicle seat,
the seat cushion frame as the frame comprises one-end-side frame as the resin molding portion located at one end portion in the widthwise direction of the vehicle seat, the other-end-side frame located at the other end portion in the widthwise direction in the state of facing the one-end-side frame, and a buttocks supporting portion that is located between the one-end-side frame and the other-end-side frame in the widthwise direction of the seat cushion frame to support buttocks of an occupant,
the buttocks supporting portion is a plate-shaped portion that extends along the front to back direction of the vehicle seat,
a hole is provided between the one-end-side frame and the buttocks supporting portion in the widthwise direction,
the first hole is provided within a range in which the hole is provided in the front to back direction in the one-end-side frame,
the one-end-side frame is provided with a bent portion that extends along the widthwise direction from the outer surface located outside in the widthwise direction of the one-end-side frame and then is bent to face the outer surface, and
the bent portion is provided in the one-end-side frame to include a position of the first hole in the front to back direction.

10. The device with a frame according to claim 1 or 2,
wherein the device with a frame is a vehicle seat, and
the assembly target member is a link that is provided in a height adjustment mechanism for vertically moving the vehicle seat and revolves around the shaft-shaped member.

11. The device with a frame according to claim 1,
wherein the metal portion is a supporting member that is a part of the assembly target member and is coaxially attached to the shaft-shaped member,
the assembly target member is a movable member that is pivotally supported by the supporting member to extend along the frame,
a convex portion protruding in an axial direction is provided on the shaft-shaped member,
a concave portion serving as the second hole, into which the convex portion is inserted, is recessed in the supporting member along the axial direction, and
in a boundary between the convex portion of the shaft-shaped member and the concave portion of the supporting member, a welding mark due to laser welding is formed along the periphery of the convex portion.

12. The device with a frame according to claim 11,
wherein the flange portion is provided on an opposite side of the side on which the convex portion of the shaft-shaped member is provided, and
the flange portion is provided with a concave portion that surrounds the welding mark.

13. The device with a frame according to claim 11 or 12,
wherein the concave portion of the supporting member extends to a position that passes through the movable member,
the convex portion of the shaft-shaped member fitted to the concave portion extends to a position facing the movable member, and
the welding mark is formed up to a position facing the movable member.

14. The device with a frame according to any one of claims 11 to 13,
wherein the flange portion of the shaft-shaped member is provided with a stepped portion that houses the frame to interpose the frame together with the supporting member.

15. The device with a frame according to claim 14,
wherein the stepped portion, the frame, and the welding mark are present on a same plane.

16. The device with a frame according to any one of claims 11 to 15,
wherein the welding mark is formed in a zigzag pattern along the boundary.

17. The device with a frame according to claim 11,
wherein the device with a frame is a seat,
the seat comprises right and left cushion frames serving as the frame, and a pipe-shaped connection member assembled to the right and left cushion frames via the first hole, and
the supporting member is coaxially attached to the shaft-shaped member and is fitted to the connection member.

18. The device with a frame according to claim 17,
wherein the connection member, the supporting member, and the shaft-shaped member are coaxially disposed.

19. The device with a frame according to claim 17 or 18,
wherein the movable member comprises the supporting member, and a movable member main body that is pivotally supported on the supporting member by being fitted to the supporting member, and
an outer diameter of a shaft portion configured to pivotally support the movable member main body in the supporting member is smaller than an outer diameter of the connection member.

20. The device with a frame according to any one of claims 17 to 19,
wherein the concave portion of the supporting member is provided to an inner side from the end portion of the connection member.

21. The device with a frame according to any one of claims 17 to 20,
wherein the convex portion of the shaft-shaped member is provided to the inner side from the end portion of the connection member.
